# EUROPEAN PATENT APPLICATION

(11) **EP 4 117 184 A1**
(43) Date of publication of application: **11.01.2023**
(21) Application number: 21779904.8
(22) Date of filing: 23.03.2021
(51) Int. Cl.: H04B 1/04, H04B 1/18

(54) **ANTENNA TUNING METHOD AND APPARATUS, AND ELECTRONIC DEVICE AND NETWORK DEVICE**

(30) Priority: 02.04.2020 CN 202010254433
(71) Applicant: Huawei Technologies Co., Ltd., Shenzhen, Guangdong 518129 (CN)
(72) Inventor: WANG, Hui, Shenzhen, Guangdong 518129 (CN); DING, Rentian, Shenzhen, Guangdong 518129 (CN); LUO, Hongting, Shenzhen, Guangdong 518129 (CN); HOU, Meng, Shenzhen, Guangdong 518129 (CN); WU, Yanming, Shenzhen, Guangdong 518129 (CN); LEI, Jianwen, Shenzhen, Guangdong 518129 (CN); WEI, Xiqing, Shenzhen, Guangdong 518129 (CN)
(74) Representative: Pfenning, Meinig & Partner mbB
(86) International application number: PCT/CN2021/082218
(87) International publication number: WO 2021/197115

(57) **Abstract**

An antenna tuning method and apparatus, an electronic device, and a network side device are provided. In the antenna tuning method, the electronic device determines N antennas, where N≥2, generates tuning status combinations of the N antennas based on a tuning status of each of the N antennas, sequentially transmits an uplink signal based on each tuning status combination by using the N antennas, receives a receiving quality that is of the tuning status combination and that is sent by a network side device, ends the step of sequentially transmitting an uplink signal based on each tuning status combination by using the N antennas when determining that a receiving quality of one tuning status combination meets a preset condition, and sets the tuning statuses of the N antennas to tuning statuses in the one tuning status combination. In this application, an antenna in the electronic device can be quickly tuned, so that better communication quality is achieved between the electronic device and the network side device.

## Description

### TECHNICAL FIELD

This application relates to the field of intelligent electronic device technologies, and in particular, to an antenna tuning method and apparatus, an electronic device, and a network side device.

### BACKGROUND

With the development of mobile electronic device products, a user, a device manufacturer, an operator, and the like have an increasingly high requirement on performance of a mobile electronic device. In this case, indicators such as strength and sensitivity of an uplink signal and a downlink signal of the mobile electronic device in a communication process attract more attention. As an indispensable and important combination part in a communication system of the mobile electronic device, antenna performance determines final communication performance and capability of the mobile electronic device. Therefore, it is critical to improve the antenna performance.

However, improvement of antenna performance is generally limited to improving basic performance of an antenna in the mobile electronic device in free space. This cannot ensure good communication quality during communication between the mobile electronic device and a base station.

### SUMMARY

This application provides an antenna tuning method and apparatus, an electronic device, and a network side device, to quickly tune an antenna in the electronic device, so that better communication quality is achieved between the electronic device and the network side device.

According to a first aspect, an embodiment of this application provides an antenna tuning method, including the following steps:
An electronic device determines N antennas, where N≥2.

The electronic device generates tuning status combinations of the N antennas based on a tuning status of each of the N antennas. One tuning status combination includes one tuning status of each of the N antennas, and at least one antenna has a different tuning status in a different tuning status combination.

The electronic device sequentially transmits an uplink signal based on each tuning status combination by using the N antennas.

The electronic device receives a receiving quality that is of the tuning status combination and that is sent by a network side device. The receiving quality of the tuning status combination is a quality of receiving, by the network side device, an uplink signal transmitted by the electronic device based on the tuning status combination by using the N antennas.

When determining that a receiving quality of one tuning status combination meets a preset condition, the electronic device ends the step of sequentially transmitting an uplink signal based on each tuning status combination by using the N antennas, and sets the tuning statuses of the N antennas to tuning statuses in the one tuning status combination.

Using N=2 as an example, the antenna tuning method includes the following steps:
The electronic device determines two antennas that are respectively a first antenna and a second antenna. The first antenna includes a first tuning status and a second tuning status, and the second antenna includes a third tuning status and a fourth tuning status.

The electronic device generates four tuning status combinations that are respectively a first tuning status combination to a fourth tuning status combination. The first tuning status combination includes the first tuning status and the third tuning status, the second tuning status combination includes the second tuning status and the third tuning status, the third tuning status combination includes the first tuning status and the fourth tuning status, and the fourth tuning status combination includes the second tuning status and the fourth tuning status.

The electronic device sequentially transmits an uplink signal based on the first tuning status combination to the fourth tuning status combination by using the two antennas.

The electronic device receives a receiving quality, sent by the network side device, in the tuning status combination. The tuning status combination is a tuning status combination in which the electronic device transmits the uplink signal based on the first tuning status combination to the fourth tuning status combination by using the two antennas.

When determining that a receiving quality of one tuning status combination meets a preset condition, the electronic device ends the step of sequentially transmitting an uplink signal based on the first tuning status combination to the fourth tuning status combination by using the two antennas, and sets the tuning status of the two antennas to a tuning status in the one tuning status combination.

In the method, the electronic device selects, from the tuning status combinations of the N antennas, a tuning status combination whose receiving quality meets a preset condition, and sets the tuning statuses of the N antennas to tuning statuses in the one tuning status combination, so that an antenna in the electronic device can be quickly tuned, and better communication quality is implemented between the electronic device and the network side device.

The receiving quality is a quality score; and that the electronic device determines that a receiving quality of one tuning status combination meets a preset condition includes the following steps:
The electronic device determines that the quality score of the tuning status combination exceeds a preset score threshold.

The receiving quality is a quality parameter value; and that the electronic device determines that a receiving quality of one tuning status combination meets a preset condition includes:
The electronic device determines that a quality parameter value of one tuning status combination meets a preset condition corresponding to the quality parameter value.

Alternatively, the electronic device calculates a quality score based on the quality parameter value, and determines that the quality score of the tuning status combination exceeds a preset score threshold.

The quality parameter value includes: a receive power of the uplink signal, and/or linearity of the uplink signal, and/or an error vector magnitude (error vector magnitude, EVM), and/or a quantity of resource blocks (resource blocks, RBs), and/or a modulation and coding scheme (modulation and coding scheme, MCS) order, and/or a throughput. That the electronic device calculates a quality score based on the quality parameter value includes:
The electronic device multiplies a preset score of each quality parameter value by a weight value corresponding to the quality parameter value, and then calculates a sum of products to obtain the quality score.

The method further includes the following steps:
After sequentially transmitting the uplink signal based on each tuning status combination by using the N antennas, and when determining that a receiving quality of any tuning status combination does not meet the preset condition, the electronic device selects a tuning status combination with an optimal receiving quality.

The electronic device sets the tuning statuses of the N antennas to tuning statuses in the tuning status combination with the optimal receiving quality.

The tuning status of the antenna includes: a capacitance value, and/or a switch on/off state, and/or an inductance value.

According to a second aspect, an embodiment of this application provides an antenna tuning method, including the following steps:
An electronic device determines N antennas, where N≥2.

The electronic device generates tuning status combinations of the N antennas based on a tuning status of each of the N antennas. One tuning status combination includes one tuning status of each of the N antennas, and at least one antenna has a different tuning status in a different tuning status combination.

The electronic device sequentially transmits an uplink signal based on each tuning status combination by using the N antennas.

The electronic device receives a receiving quality that is of each tuning status combination and that is sent by a network side device. The receiving quality of the tuning status combination is a quality of receiving, by the network side device, an uplink signal transmitted by the electronic device based on the tuning status combination by using the N antennas.

The electronic device selects a tuning status combination with an optimal receiving quality.

The electronic device sets the tuning statuses of the N antennas to tuning statuses in the tuning status combination with the optimal receiving quality.

Using N=2 as an example, the antenna tuning method includes the following steps:
The electronic device determines two antennas that are respectively a first antenna and a second antenna. The first antenna includes a first tuning status and a second tuning status, and the second antenna includes a third tuning status and a fourth tuning status.

The electronic device generates four tuning status combinations that are respectively a first tuning status combination to a fourth tuning status combination. The first tuning status combination includes the first tuning status and the third tuning status, the second tuning status combination includes the second tuning status and the third tuning status, the third tuning status combination includes the first tuning status and the fourth tuning status, and the fourth tuning status combination includes the second tuning status and the fourth tuning status.

The electronic device sequentially transmits an uplink signal based on the first tuning status combination to the fourth tuning status combination by using the two antennas.

The electronic device receives a receiving quality, sent by the network side device, of the first tuning status combination to the fourth tuning status combination.

The electronic device selects a tuning status combination with an optimal receiving quality from the first tuning status combination to the fourth tuning status combination, and sets the tuning status of the two antennas to a tuning status in the tuning status combination with the optimal receiving quality.

In the method, the electronic device selects, from the tuning status combinations of the N antennas, a tuning status combination with an optimal receiving quality, and sets the tuning statuses of the N antennas to tuning statuses in the tuning status combination with the optimal receiving quality, so that an antenna in the electronic device can be quickly tuned, and better communication quality is implemented between the electronic device and the network side device.

The receiving quality is a quality score; and that the electronic device selects a tuning status combination with an optimal receiving quality includes the following steps:
The electronic device selects a tuning status combination with a highest quality score.

The receiving quality is a quality parameter value; and that the electronic device selects a tuning status combination with an optimal receiving quality includes:

The electronic device calculates a quality score based on the quality parameter value, and selects a tuning status combination with a highest quality score.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. That the electronic device calculates a quality score based on the quality parameter value includes:
The electronic device multiplies a preset score of each quality parameter value by a weight value corresponding to the quality parameter value, and then calculates a sum of products to obtain the quality score.

The tuning status of the antenna includes: a capacitance value, and/or a switch on/off state, and/or an inductance value.

According to a third aspect, an embodiment of this application provides an antenna tuning method, including the following steps:
A network side device receives an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The network side device obtains a receiving quality of the uplink signal.

The network side device sends the receiving quality as a receiving quality of one tuning status combination to electronic device.

The receiving quality of the tuning status combination is a quality score; and that the network side device obtains a receiving quality of the uplink signal includes the following steps:
The network side device obtains a quality parameter value of the uplink signal.

The network side device calculates a quality score based on the quality parameter value.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. That the network side device calculates a quality score based on the quality parameter value includes:
The network side device multiplies a preset score of each quality parameter value by a weight value corresponding to the quality parameter value, and then calculates a sum of products to obtain the quality score.

The tuning status of the antenna includes: a capacitance value, and/or a switch on/off state, and/or an inductance value.

According to a fourth aspect, an embodiment of this application provides an antenna tuning method, including the following steps:
An electronic device determines N antennas, where N≥2.

The electronic device generates tuning status combinations of the N antennas based on a tuning status of each of the N antennas. One tuning status combination includes one tuning status of each of the N antennas, and at least one antenna has a different tuning status in a different tuning status combination.

The electronic device sequentially transmits an uplink signal based on each tuning status combination by using the N antennas.

The electronic device receives a tuning status combination indicated by a network side device. The indicated tuning status combination is indicated after the network side device determines that a receiving quality of the tuning status combination meets a preset condition. The receiving quality of the tuning status combination is a quality of receiving, by the network side device, an uplink signal transmitted by the electronic device based on the tuning status combination by using the N antennas.

The electronic device ends the step of sequentially transmitting an uplink signal based on each tuning status combination by using the N antennas, and sets the tuning statuses of the N antennas to tuning statuses in the indicated tuning status combination.

Using N=2 as an example, the antenna tuning method includes the following steps:
The electronic device determines two antennas that are respectively a first antenna and a second antenna. The first antenna includes a first tuning status and a second tuning status, and the second antenna includes a third tuning status and a fourth tuning status.

The electronic device generates four tuning status combinations that are respectively a first tuning status combination to a fourth tuning status combination. The first tuning status combination includes the first tuning status and the third tuning status, the second tuning status combination includes the second tuning status and the third tuning status, the third tuning status combination includes the first tuning status and the fourth tuning status, and the fourth tuning status combination includes the second tuning status and the fourth tuning status.

The electronic device sequentially transmits an uplink signal based on the first tuning status combination to the fourth tuning status combination by using the two antennas.

The electronic device receives a tuning status combination indicated by the network side device. The indicated tuning status combination is indicated after the network side device determines that a receiving quality of the tuning status combination meets a preset condition. The receiving quality of the tuning status combination is a quality of receiving, by the network side device, an uplink signal transmitted by the electronic device based on the tuning status combination by using the two antennas.

The electronic device sets the tuning status of the two antennas to a tuning status in the tuning status combination indicated by the network side device.

In the method, the network side device selects, from the tuning status combinations of the N antennas, a tuning status combination whose receiving quality meets a preset condition and indicates the selected tuning status combination to the electronic device, and the electronic device sets the tuning statuses of the N antennas to tuning statuses in the indicated tuning status combination, so that an antenna in the electronic device can be quickly tuned, and better communication quality is achieved between the electronic device and the network side device.

The antenna tuning method further includes the following steps: When the electronic device sequentially transmits the uplink signal based on each tuning status combination by using the N antennas, and does not receive a tuning status combination indicated by the network side device, the electronic device sends, to the network side device, a notification that transmission of the uplink signals based on the tuning status combinations ends. The electronic device receives a tuning status combination with an optimal receiving quality, and sets the tuning statuses of the N antennas to tuning statuses in the tuning status combination with the optimal receiving quality, where the tuning status combination with the optimal receiving quality is indicated by the network side device.

The tuning status of the antenna includes: a capacitance value, and/or a switch on/off state, and/or an inductance value.

According to a fifth aspect, an embodiment of this application provides an antenna tuning method, including the following steps:
A network side device receives an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The network side device obtains a receiving quality of the uplink signal.

The network side device indicates the tuning status combination to the electronic device when determining that the receiving quality meets a preset condition, so that the electronic device sets the tuning statuses of the N antennas to tuning statuses in the indicated tuning status combination.

The receiving quality is a quality parameter value; and that the network side device determines that the receiving quality meets a preset condition includes:
The network side device determines that each quality parameter value meets a preset condition corresponding to the quality parameter value.

The receiving quality is a quality score, and that the network side device obtains a receiving quality of the uplink signal includes:
The network side device obtains a quality parameter value of the uplink signal, and calculates a quality score based on the quality parameter value.

Correspondingly, that the network side device determines that the receiving quality meets a preset condition includes:
The network side device determines that the quality score exceeds a preset score threshold.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. That the network side device calculates a quality score based on the quality parameter value includes:
The network side device multiplies a preset score of each quality parameter value by a weight value corresponding to the quality parameter value, and then calculates a sum of products to obtain the quality score.

The antenna tuning method further includes:
If the network side device receives a notification that transmission of uplink signals, sent by the electronic device, based on tuning status combinations ends, and determines that none of receiving qualities meets the preset condition, the network side device selects a tuning status combination with an optimal receiving quality, and indicates the selected tuning status combination with the optimal receiving quality to the electronic device.

The tuning status of the antenna includes: a capacitance value, and/or a switch on/off state, and/or an inductance value.

According to a sixth aspect, an embodiment of this application provides an antenna tuning method, including the following steps:
An electronic device determines N antennas, where N≥2.

The electronic device generates tuning status combinations of the N antennas based on a tuning status of each of the N antennas. One tuning status combination includes one tuning status of each of the N antennas, and at least one antenna has a different tuning status in a different tuning status combination.

The electronic device sequentially transmits an uplink signal based on each tuning status combination by using the N antennas.

The electronic device receives a tuning status combination indicated by a network side device. The indicated tuning status combination is a tuning status combination with an optimal receiving quality after the electronic device sequentially transmits the uplink signal based on each tuning status combination by using the N antennas, where the tuning status combination with the optimal receiving quality is selected by the network side device. A receiving quality of the tuning status combination is a quality of receiving, by the network side device, an uplink signal transmitted by the electronic device based on the tuning status combination by using the N antennas.

The electronic device sets the tuning statuses of the N antennas to tuning statuses in the indicated tuning status combination.

Using N=2 as an example, the antenna tuning method includes the following steps:
The electronic device determines two antennas that are respectively a first antenna and a second antenna. The first antenna includes a first tuning status and a second tuning status, and the second antenna includes a third tuning status and a fourth tuning status.

The electronic device generates four tuning status combinations that are respectively a first tuning status combination to a fourth tuning status combination. The first tuning status combination includes the first tuning status and the third tuning status, the second tuning status combination includes the second tuning status and the third tuning status, the third tuning status combination includes the first tuning status and the fourth tuning status, and the fourth tuning status combination includes the second tuning status and the fourth tuning status.

The electronic device sequentially transmits an uplink signal based on the first tuning status combination to the fourth tuning status combination by using the two antennas.

The electronic device receives a tuning status combination indicated by the network side device. The indicated tuning status combination is a tuning status combination with an optimal receiving quality after the electronic device sequentially transmits the uplink signal based on the first tuning status combination to the fourth tuning status combination by using the two antennas, where the tuning status combination with the optimal receiving quality is selected by the network side device. A receiving quality of the tuning status combination is a quality of receiving, by the network side device, an uplink signal transmitted by the electronic device based on the tuning status combination by using the two antennas.

The electronic device sets the tuning status of the two antennas to a tuning status in the tuning status combination indicated by the network side device.

In the method, the network side device selects, from the tuning status combinations of the N antennas, the tuning status combination with the optimal receiving quality, and indicates the selected tuning status combination to the electronic device, and the electronic device sets the tuning statuses of the N antennas to tuning statuses in the indicated tuning status combination, so that an antenna in the electronic device can be quickly tuned, and better communication quality is implemented between the electronic device and the network side device.

The tuning status of the antenna includes: a capacitance value, and/or a switch on/off state, and/or an inductance value.

According to a seventh aspect, an embodiment of this application provides an antenna tuning method, including the following steps:
A network side device receives an uplink signal sequentially transmitted by an electronic device based on each tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The network side device obtains a receiving quality of each tuning status combination based on the received uplink signal. The receiving quality of the tuning status combination is a quality of receiving, by the network side device, an uplink signal transmitted by the electronic device based on the tuning status combination by using the N antennas.

The network side device selects a tuning status combination with an optimal receiving quality after the electronic device sequentially transmits the uplink signal based on each tuning status combination by using the N antennas.

The network side device indicates the selected tuning status combination to the electronic device, so that the electronic device sets the tuning statuses of the N antennas to tuning statuses in the indicated tuning status combination.

The receiving quality is a quality score; and that the network side device selects a tuning status combination corresponding to an optimal receiving quality includes:
The network side device selects a tuning status combination corresponding to a highest quality score.

The receiving quality is a quality parameter value; and that the network side device selects a tuning status combination corresponding to an optimal receiving quality includes:

The network side device calculates a quality score based on the quality parameter value, and selects a tuning status combination corresponding to a highest quality score.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. That the network side device calculates a quality score based on the quality parameter value includes:

The network side device multiplies a preset score of each quality parameter value by a weight value corresponding to the quality parameter value, and then calculates a sum of products to obtain the quality score.

The tuning status of the antenna includes: a capacitance value, and/or a switch on/off state, and/or an inductance value.
According to an eighth aspect, an embodiment of this application provides an electronic device, including:
one or more processors, a memory, and one or more computer programs, where the one or more computer programs are stored in the memory, the one or more computer programs include instructions, and when the instructions are executed by the device, the device is enabled to perform the following steps:
determining N antennas, where N≥2;
generating tuning status combinations of the N antennas based on a tuning status of each of the N antennas, where one tuning status combination includes one tuning status of each of the N antennas, and at least one antenna has a different tuning status in a different tuning status combination;
sequentially transmitting an uplink signal based on each tuning status combination by using the N antennas;
receiving a receiving quality that is of the tuning status combination and that is sent by a network side device, where the receiving quality of the tuning status combination is a quality of receiving, by the network side device, an uplink signal transmitted by the electronic device based on the tuning status combination by using the N antennas; and
when determining that a receiving quality of one tuning status combination meets a preset condition, ending the step of sequentially transmitting an uplink signal based on each tuning status combination by using the N antennas, and setting the tuning statuses of the N antennas to tuning statuses in the one tuning status combination.

According to a ninth aspect, an embodiment of this application provides an electronic device, including:
one or more processors, a memory, and one or more computer programs, where the one or more computer programs are stored in the memory, the one or more computer programs include instructions, and when the instructions are executed by the device, the device is enabled to perform the following steps:
determining N antennas, where N≥2;
generating tuning status combinations of the N antennas based on a tuning status of each of the N antennas, where one tuning status combination includes one tuning status of each of the N antennas, and at least one antenna has a different tuning status in a different tuning status combination;
sequentially transmitting an uplink signal based on each tuning status combination by using the N antennas;
receiving a receiving quality that is of each tuning status combination and that is sent by a network side device, where the receiving quality of the tuning status combination is a quality of receiving, by the network side device, an uplink signal transmitted by the electronic device based on the tuning status combination by using the N antennas;
selecting a tuning status combination with an optimal receiving quality; and
setting the tuning statuses of the N antennas to tuning statuses in the tuning status combination with the optimal receiving quality.

According to a tenth aspect, an embodiment of this application provides an electronic device, including:
one or more processors, a memory, and one or more computer programs, where the one or more computer programs are stored in the memory, the one or more computer programs include instructions, and when the instructions are executed by the device, the device is enabled to perform the following steps:
determining N antennas, where N≥2;
generating tuning status combinations of the N antennas based on a tuning status of each of the N antennas, where one tuning status combination includes one tuning status of each of the N antennas, and at least one antenna has a different tuning status in a different tuning status combination;
sequentially transmitting an uplink signal based on each tuning status combination by using the N antennas;
receiving a tuning status combination indicated by a network side device, where the indicated tuning status combination is indicated after the network side device determines that a receiving quality of the tuning status combination meets a preset condition, and the receiving quality of the tuning status combination is a quality of receiving, by the network side device, an uplink signal transmitted by the electronic device based on the tuning status combination by using the N antennas; and
ending the step of sequentially transmitting an uplink signal based on each tuning status combination by using the N antennas, and setting the tuning statuses of the N antennas to tuning statuses in the indicated tuning status combination.

According to an eleventh aspect, an embodiment of this application provides an electronic device, including:
one or more processors, a memory, and one or more computer programs, where the one or more computer programs are stored in the memory, the one or more computer programs include instructions, and when the instructions are executed by the device, the device is enabled to perform the following steps:
determining N antennas, where N≥2;
generating tuning status combinations of the N antennas based on a tuning status of each of the N antennas, where one tuning status combination includes one tuning status of each of the N antennas, and at least one antenna has a different tuning status in a different tuning status combination;
sequentially transmitting an uplink signal based on each tuning status combination by using the N antennas;
receiving a tuning status combination indicated by a network side device, where the indicated tuning status combination is a tuning status combination with an optimal receiving quality after the electronic device sequentially transmits the uplink signal based on each tuning status combination by using the N antennas, and the tuning status combination with the optimal receiving quality is selected by the network side device; and a receiving quality of the tuning status combination is a quality of receiving, by the network side device, an uplink signal transmitted by the electronic device based on the tuning status combination by using the N antennas; and
setting the tuning statuses of the N antennas to tuning statuses in the indicated tuning status combination.

According to a twelfth aspect, an embodiment of this application provides a network side device, including:
one or more processors, a memory, and one or more computer programs, where the one or more computer programs are stored in the memory, the one or more computer programs include instructions, and when the instructions are executed by the device, the device is enabled to perform the following steps:
receiving an uplink signal transmitted by an electronic device based on a tuning status combination by using N antennas, where N≥2, the tuning status combination is generated by the electronic device based on a tuning status of each of the N antennas, one tuning status combination includes one tuning status of each of the N antennas, and at least one antenna has a different tuning status in a different tuning status combination;
obtaining a receiving quality of an uplink signal; and
sending the receiving quality as a receiving quality of one tuning status combination to the electronic device.

According to a thirteenth aspect, an embodiment of this application provides a network side device, including:
one or more processors, a memory, and one or more computer programs, where the one or more computer programs are stored in the memory, the one or more computer programs include instructions, and when the instructions are executed by the device, the device is enabled to perform the following steps:
receiving an uplink signal transmitted by an electronic device based on a tuning status combination by using N antennas, where N≥2, the tuning status combination is generated by the electronic device based on a tuning status of each of the N antennas, one tuning status combination includes one tuning status of each of the N antennas, and at least one antenna has a different tuning status in a different tuning status combination;
obtaining a receiving quality of an uplink signal; and
when determining that the receiving quality meets a preset condition, indicating the tuning status combination to the electronic device, so that the electronic device sets the tuning statuses of the N antennas to tuning statuses in the indicated tuning status combination.

According to a fourteenth aspect, an embodiment of this application provides a network side device, including:
one or more processors, a memory, and one or more computer programs, where the one or more computer programs are stored in the memory, the one or more computer programs include instructions, and when the instructions are executed by the device, the device is enabled to perform the following steps:
receiving an uplink signal sequentially transmitted by an electronic device based on each tuning status combination by using N antennas, where N≥2, the tuning status combination is generated by the electronic device based on a tuning status of each of the N antennas, one tuning status combination includes one tuning status of each of the N antennas, and at least one antenna has a different tuning status in a different tuning status combination;
obtaining a receiving quality of each tuning status combination based on the received uplink signal, where the receiving quality of the tuning status combination is a quality of receiving an uplink signal by a network side device when the electronic device transmits the uplink signal based on the tuning status combination by using the N antennas;
selecting a tuning status combination with an optimal receiving quality after the electronic device sequentially transmits the uplink signal based on each tuning status combination by using the N antennas; and
indicating the selected tuning status combination to the electronic device, so that the electronic device sets the tuning statuses of the N antennas to tuning statuses in the indicated tuning status combination.

According to a fifteenth aspect, an embodiment of this application provides a computer-readable storage medium. The computer-readable storage medium stores a computer program, and when the computer program is run on a computer, the computer is enabled to perform the method according to the first aspect.

According to a sixteenth aspect, an embodiment of this application provides a computer-readable storage medium. The computer-readable storage medium stores a computer program, and when the computer program runs on a computer, the computer is enabled to perform the method according to the second aspect.

According to a seventeenth aspect, an embodiment of this application provides a computer-readable storage medium. The computer-readable storage medium stores a computer program, and when the computer program runs on a computer, the computer is enabled to perform the method according to the third aspect.

According to an eighteenth aspect, an embodiment of this application provides a computer-readable storage medium. The computer-readable storage medium stores a computer program, and when the computer program runs on a computer, the computer is enabled to perform the method according to the fourth aspect.

According to a nineteenth aspect, an embodiment of this application provides a computer-readable storage medium. The computer-readable storage medium stores a computer program, and when the computer program runs on a computer, the computer is enabled to perform the method according to the fifth aspect.

According to a twentieth aspect, an embodiment of this application provides a computer-readable storage medium. The computer-readable storage medium stores a computer program, and when the computer program runs on a computer, the computer is enabled to perform the method according to the sixth aspect.

According to a twenty-first aspect, an embodiment of this application provides a computer-readable storage medium. The computer-readable storage medium stores a computer program, and when the computer program runs on a computer, the computer is enabled to perform the method according to the seventh aspect.

According to a twenty-second aspect, this application provides a computer program. When the computer program is executed by a computer, the computer program is configured to perform the method according to the first aspect, the second aspect, the third aspect, the fourth aspect, the fifth aspect, the sixth aspect, or the seventh aspect. In a possible design, all or some of the programs in the twenty-second aspect may be stored in a storage medium encapsulated with a processor, or some or all of the programs may be stored in a memory that is not encapsulated with a processor.

### BRIEF DESCRIPTION OF DRAWINGS

To describe technical solutions in embodiments of the present invention more clearly, the following briefly introduces the accompanying drawings used in describing the embodiments. It is clearly that the accompanying drawings in the following descriptions show merely some embodiments of the present invention, and a person of ordinary skill in the art may still derive other drawings from these accompanying drawings without creative efforts.
FIG. 1 is a schematic diagram of impact of a hand and a head on performance of an antenna in an electronic device in the conventional technology;
FIG. 2 is a flowchart of an embodiment of an antenna tuning method according to this application;
FIG. 3 is a flowchart of another embodiment of an antenna tuning method according to this application;
FIG. 4 is a flowchart of still another embodiment of an antenna tuning method according to this application;
FIG. 5 is a flowchart of still another embodiment of an antenna tuning method according to this application;
FIG. 6 is a flowchart of still another embodiment of an antenna tuning method according to this application;
FIG. 7 is a flowchart of still another embodiment of an antenna tuning method according to this application;
FIG. 8 is a flowchart of still another embodiment of an antenna tuning method according to this application;
FIG. 9 is a flowchart of still another embodiment of an antenna tuning method according to this application;
FIG. 10 is a flowchart of still another embodiment of an antenna tuning method according to this application;
FIG. 11 is a flowchart of still another embodiment of an antenna tuning method according to this application;
FIG. 12 is a flowchart of still another embodiment of an antenna tuning method according to this application;
FIG. 13 is a schematic diagram of a structure of an embodiment of an antenna tuning apparatus according to this application;
FIG. 14 is a schematic diagram of a structure of another embodiment of an antenna tuning apparatus according to this application; and
FIG. 15 is a schematic diagram of a structure of an embodiment of an electronic device according to this application.

### DESCRIPTION OF EMBODIMENTS

Terms used in embodiments of this application are only used to explain specific embodiments of this application, but are not intended to limit this application.

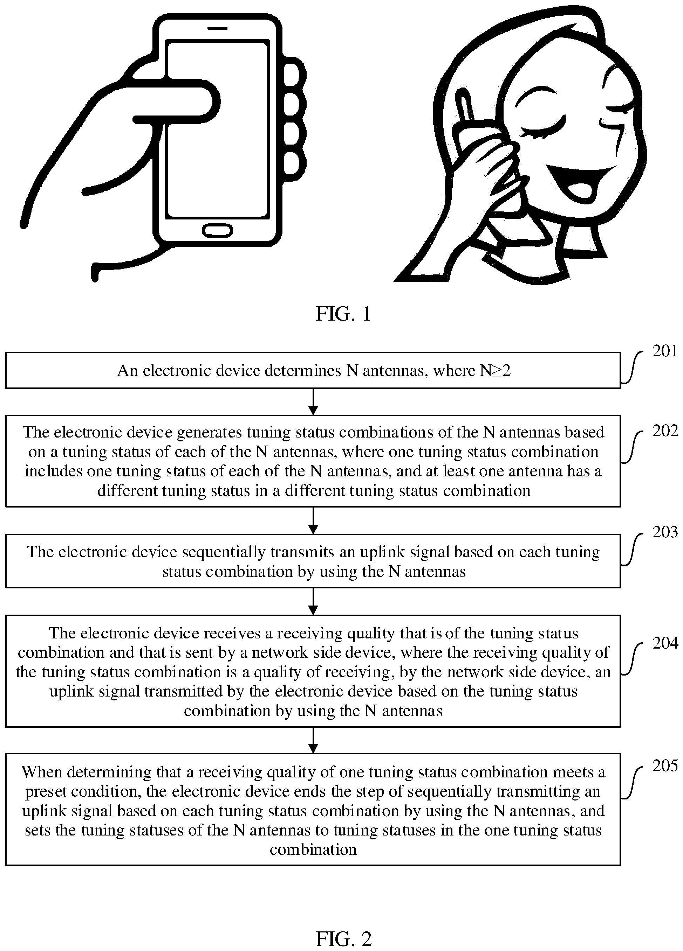

In an existing implementation solution, generally, only basic performance of an antenna in a mobile electronic device in free space is improved. However, improving the basic performance of the antenna in the electronic device in free space cannot ensure that optimal communication quality is achieved when the electronic device communicates with a network side device such as a base station. The main reason is that performance of the antenna varies with an external space environment. For example, as shown in FIG. 1, when a user holds an electronic device in a hand or places the electronic device on a head to make a call, performance of an antenna is affected, and communication quality deteriorates. Specifically, deterioration is reflected in two aspects: 1. Mismatch between the antenna and radio frequency conduction. As a result, most radio frequency signals are reflected, and cannot be transmitted to a network side device such as a base station by using the antenna. 2. A resonance frequency of the antenna changes. As a result, a frequency of a radio frequency conducted transmit signal is different from a resonance frequency of the antenna, and performance of the antenna at a frequency of a signal that needs to be transmitted is relatively poor. This deteriorates communication performance.

Therefore, this application provides an antenna tuning method and apparatus, and an electronic device, to quickly tune an antenna in the electronic device, so that good communication quality is achieved between the electronic device and a network side device such as a base station.

The electronic device described in this application may include but is not limited to an electronic device such as a mobile electronic device (mobile phone), a smart screen, an unmanned aerial vehicle, an intelligent connected vehicle (intelligent connected vehicle, ICV), a smart/intelligent car (smart/intelligent car), or an in-vehicle device.

The network side device described in this application may include but is not limited to a device located on a network side, such as a base station (NodeB), an evolved eNodeB (eNodeB), or a radio network controller (radio network controller, RNC).

The electronic device includes an antenna and a transmitter/receiver. A radio frequency signal output by the transmitter is transmitted to the antenna through a front-end component and a feeder, and is radiated by the antenna in an electromagnetic wave form. An input impedance of the antenna changes greatly with a frequency and an application scenario of a user, such as a landscape screen with two hands, a handheld call, and a head-hand call. This causes a mismatch (mismatch) between an output impedance of the transmitter and the input impedance of the antenna, so that a match relationship between the two needs to be adjusted to optimize performance of the electronic device such as a user terminal (user terminal, UE). In addition, because different antenna statuses correspond to different antenna efficiency/resonance points and radiation patterns, in different network environments, these antenna parameters need to be flexibly adjusted according to an actual network environment, so as to further improve communication performance. Moreover, with rapid development of 5G, an uplink of the electronic device such as the UE also rapidly develops from a previous single uplink to dual uplinks, for example, EUTRA-NR dual connection (EUTRA-NR dual connection, ENDC) and uplink inter-band carrier aggregation (carrier aggregation, CA), uplink multi-input multi-output (multi-input multi-output, MIMO), for example, a 5G SA mode, or even a plurality of uplinks. In a complex uplink scenario, an antenna status of each uplink needs to be flexibly adjusted to further improve overall performance of the plurality of uplinks, such as coverage and throughput capabilities. Based on one or more of the foregoing factors, in the antenna tuning method in this embodiment of this application, one or more tuning statuses are preset for each antenna of the electronic device. A tuning status applicable to the network environment is selected from a tuning status of a to-be-used antenna in different network environments, to improve communication quality between the electronic device and the network side device.

The tuning status of the antenna may include but is not limited to the following parameter values: a capacitance value, and/or a switch on/off state, and/or an inductance value. There may be one or more capacitors related to the foregoing capacitance value, there may be one or more switches related to the foregoing switch on/off state, and there may be one or more inductors related to the foregoing inductance value. This is not limited in this embodiment of this application. For a same antenna, at least one parameter value varies in a different tuning status. Components such as a capacitor, an inductor, and a switch in the foregoing parameter values are components that can affect a status of the antenna. These components may be components in the antenna, or may be components outside the antenna and located in the electronic device. This is not limited in this embodiment of this application. The tuning status of the antenna may be written into Nv of the antenna for storage.

The following describes an example of the antenna tuning method in this application.

FIG. 2 is a flowchart of an embodiment of an antenna tuning method according to this application. As shown in FIG. 2, the foregoing method may include the following steps.

Step 201: An electronic device determines N antennas, where N≥2.

The electronic device may include M antennas, where M≥N, and the electronic device may select N antennas from the M antennas. How the electronic device specifically determines the N antennas is not limited in this embodiment of this application.

Step 202: The electronic device generates tuning status combinations of the N antennas based on a tuning status of each of the N antennas. One tuning status combination includes one tuning status of each of the N antennas, and at least one antenna has a different tuning status in a different tuning status combination.

Step 203: The electronic device sequentially transmits an uplink signal based on each tuning status combination by using the N antennas.

The uplink signals transmitted by the electronic device in the tuning status combinations by using the N antennas may be same uplink signals, or may be different uplink signals. This is not limited in this embodiment of this application.

Step 204: The electronic device receives a receiving quality that is of the tuning status combination and that is sent by a network side device. The receiving quality of the tuning status combination is a quality of receiving, by the network side device, an uplink signal transmitted by the electronic device based on the tuning status combination by using the N antennas.

A quality parameter for measuring the receiving quality of the uplink signal may include but is not limited to: a receive power of the uplink signal, and/or linearity of the uplink signal, and/or an error vector magnitude (error vector magnitude, EVM), and/or a quantity of resource blocks (resource blocks, RBs), and/or a modulation and coding scheme (modulation and coding scheme, MCS) order, and/or a throughput, and the like.

Correspondingly, the receiving quality of the uplink signal may be a quality parameter value or a quality score. The quality score may be calculated based on the quality parameter value. A specific calculation method is not limited in this embodiment of this application.

Step 205: When determining that a receiving quality of one tuning status combination meets a preset condition, the electronic device ends the step of sequentially transmitting an uplink signal based on each tuning status combination by using the N antennas, and sets the tuning statuses of the N antennas to tuning statuses in the one tuning status combination.

In the method shown in FIG. 2, the electronic device sequentially transmits the uplink signal based on each tuning status combination of the N antennas by using the N antennas, receives the receiving quality, sent by the network side device, in the tuning status combination, ends the step of sequentially transmitting the uplink signal based on each tuning status combination by using the N antennas when determining that the receiving quality of one tuning status combination meets the preset condition, and sets the tuning statuses of the N antennas to the tuning statuses in the one tuning status combination. In this way, a tuning status combination whose receiving quality meets the preset condition is quickly selected from the tuning status combinations of the N antennas, and the tuning statuses of the N antennas are correspondingly set, to quickly tune an antenna in the electronic device, and achieve better communication quality between the electronic device and the network side device.

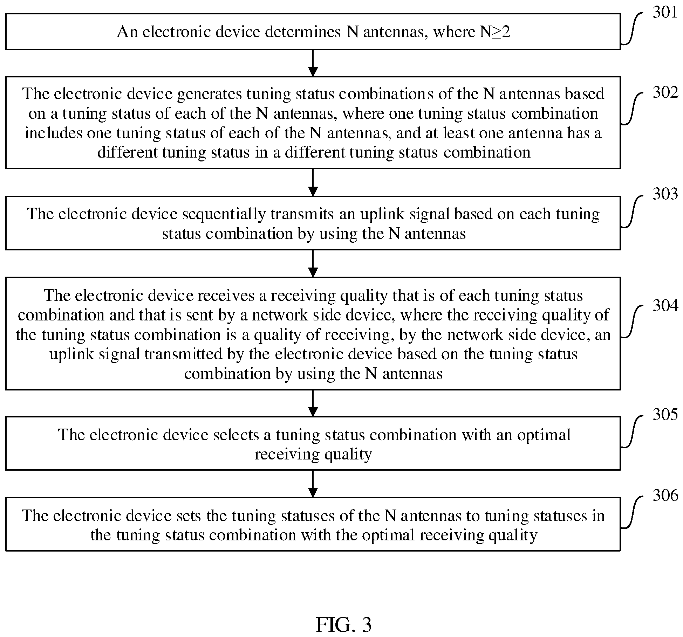

FIG. 3 is a flowchart of another embodiment of an antenna tuning method according to this application. As shown in FIG. 3, the foregoing method may include the following steps.

Step 301: An electronic device determines N antennas, where N≥2.

Step 302: The electronic device generates tuning status combinations of the N antennas based on a tuning status of each of the N antennas. One tuning status combination includes one tuning status of each of the N antennas, and at least one antenna has a different tuning status in a different tuning status combination.

Step 303: The electronic device sequentially transmits an uplink signal based on each tuning status combination by using the N antennas.

Step 304: The electronic device receives a receiving quality that is of each tuning status combination and that is sent by a network side device. The receiving quality of the tuning status combination is a quality of receiving, by the network side device, an uplink signal transmitted by the electronic device based on the tuning status combination by using the N antennas.

Step 305: The electronic device selects a tuning status combination with an optimal receiving quality.

Step 306: The electronic device sets the tuning statuses of the N antennas to tuning statuses in the tuning status combination with the optimal receiving quality.

For an implementation of the steps in FIG. 3, refer to related descriptions in the embodiment shown in FIG. 2. Details are not described herein again.

In the method shown in FIG. 3, the electronic device selects the tuning status combination with the optimal receiving quality, and sets the tuning status of N antennas to the tuning status in the tuning status combination with the optimal receiving quality. In this way, the tuning status combination with the optimal receiving quality is quickly selected from the tuning status combinations of the N antennas and the tuning statuses of the N antennas are correspondingly set, to quickly tune the N antennas in the electronic device, and achieve optimal communication quality between the electronic device and the network side device.

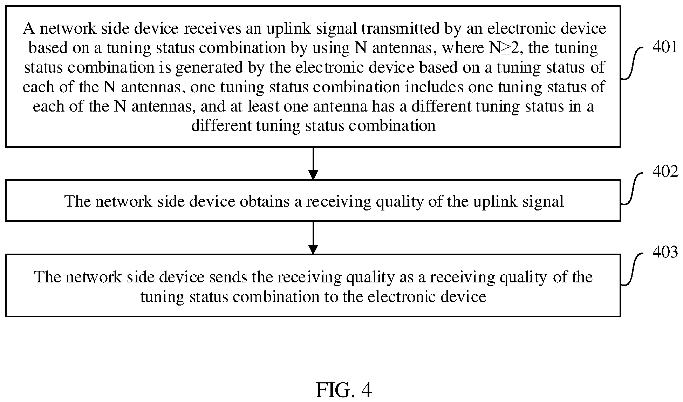

FIG. 4 is a flowchart of still another embodiment of an antenna tuning method according to this application. As shown in FIG. 4, the foregoing method may include the following steps.

Step 401: A network side device receives an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

Step 402: The network side device obtains a receiving quality of the uplink signal.

Step 403: The network side device sends the receiving quality as a receiving quality of the one tuning status combination to the electronic device.

For an implementation of the steps in FIG. 4, refer to related descriptions in the embodiments shown in FIG. 2 and FIG. 3. Details are not described herein again.

In the method shown in FIG. 4, the network side device receives the uplink signal transmitted by the electronic device in one tuning status combination by using the N antennas, obtains the receiving quality of the uplink signal, and sends the receiving quality as the receiving quality of the one tuning status combination to the electronic device. In this way, a tuning status combination is quickly selected from the tuning status combinations of the N antennas in cooperation with the electronic device, and the tuning statuses of the N antennas are correspondingly set, to quickly tune the N antennas in the electronic device, and achieve good communication quality between the electronic device and the network side device.

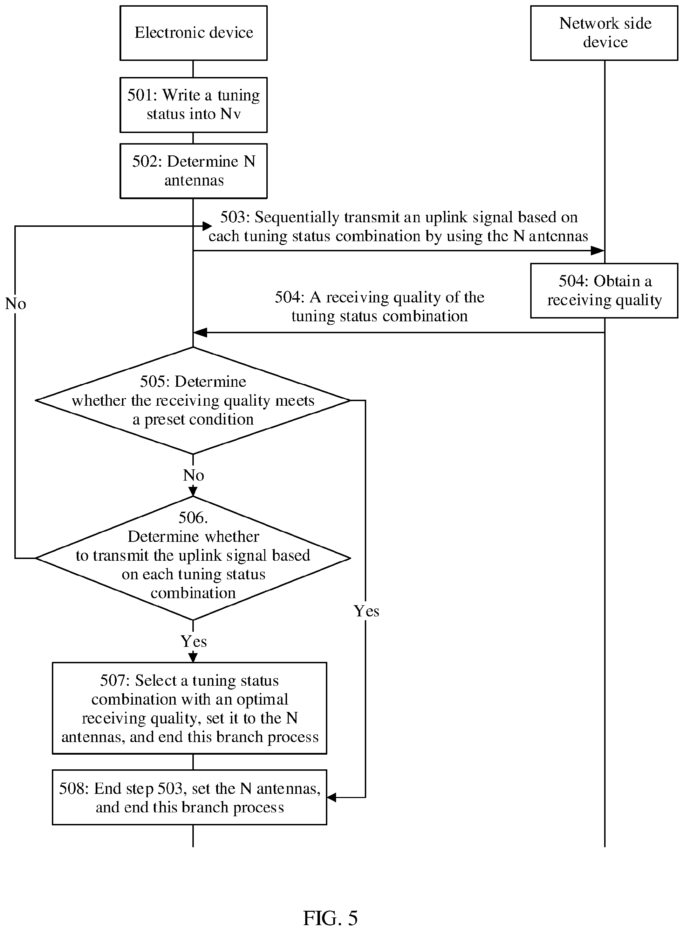

FIG. 5 is a flowchart of still another embodiment of an antenna tuning method according to this application. As shown in FIG. 5, the antenna tuning method may include the following steps.

Step 501: For each antenna of an electronic device, preset at least one tuning status of the antenna, and write the tuning status into Nv of the antenna.

Step 502: When detecting a change in a communication environment, the electronic device determines, from M antennas, N antennas that need to be currently used, where M is a total quantity of antennas of the electronic device, and M≥N.

The change in the communication environment includes but is not limited to: a change of a cell in which the electronic device is located, and/or a frequency, and/or a frequency band, and/or an antenna, and the like.

Generally, conditions based on which the electronic device determines the N antennas that need to be used may include but are not limited to the following conditions: different operating frequency bands of the electronic device, for example, a high frequency, or a low frequency, or a CA combination between a single frequency band and a plurality of frequency bands, or a hand holding posture of a user, for example, one hand, two hands, a left hand, a right hand, close to a body, or close to a head, or different services scheduled by a base station, for example, single-stream or dual-transmission MIMO. How the electronic device specifically determines the N antennas that need to be currently used is not limited in this embodiment of this application.

Step 503: The electronic device sequentially transmits an uplink signal based on each tuning status combination by using the N antennas.

An example is as follows:
If a value of N is 2, the antennas are an antenna 1 and an antenna 2, the antenna 1 has a tuning status 1 and a tuning status 2, and the antenna 2 has a tuning status 3 and a tuning status 4, there are four tuning status combinations in total, which are respectively:
Combination 1: (antenna 1, tuning status 1) (antenna 2, tuning status 3); combination 2: (antenna 1, tuning status 2) (antenna 2, tuning status 3); combination 3: (antenna 1, tuning status 1) (antenna 2, tuning status 4); combination 4: (antenna 1, tuning status 2) (antenna 2, tuning status 4).

If a value of N is 2, the two antennas are antenna 1 and antenna 2, and each antenna has three tuning statuses: tuning status 11/12/13 and tuning status 21/22/23. In this case, there are 3^{∗}3=9 tuning status combinations, which are as follows:
Combination 1: (antenna 1, tuning status 11) (antenna 2, tuning status 21);
Combination 2: (antenna 1, tuning status 11) (antenna 2, tuning status 22);
Combination 3: (antenna 1, tuning status 11) (antenna 2, tuning status 23);
Combination 4: (antenna 1, tuning status 12) (antenna 2, tuning status 21);
Combination 5: (antenna 1, tuning status 12) (antenna 2, tuning status 22);
Combination 6: (antenna 1, tuning status 12) (antenna 2, tuning status 23);
Combination 7: (antenna 1, tuning status 13) (antenna 2, tuning status 21);
Combination 8: (antenna 1, tuning status 13) (antenna 2, tuning status 22);
Combination 9: (antenna 1, tuning status 13) (antenna 2, tuning status 23).

When a value of N is a natural number greater than 2, for a tuning status combination, refer to the foregoing example in which N=2, and no further example is provided herein.

The uplink signal may carry an identifier of a tuning status combination, and the identifier is used to indicate the tuning status combination corresponding to the uplink signal to the network side device. Based on the foregoing example in which the value of N is 2, if the electronic device transmits an uplink signal based on the tuning status combination 3 by using two antennas, an identifier of the tuning status combination 3 may be carried in the uplink signal, to indicate the tuning status combination 3 corresponding to the uplink signal to the network side device.

Step 504: The network side device receives the uplink signal, obtains a receiving quality of the uplink signal, and sends the receiving quality as a receiving quality of the tuning status combination corresponding to the uplink signal to the electronic device.

The receiving quality of the tuning status combination is a quality of receiving, by the network side device, an uplink signal transmitted by the electronic device based on the tuning status combination by using the N antennas.

When sending the receiving quality of the tuning status combination to the electronic device, the network side device may send the receiving quality and an identifier of the corresponding tuning status combination.

A quality parameter for measuring the receiving quality of the uplink signal may include but is not limited to: a receive power of the uplink signal, and/or linearity of the uplink signal, and/or an EVM, and/or a quantity of RBs, and/or an MCS order, and/or a throughput, and the like.

Correspondingly, the receiving quality of the uplink signal may be a quality parameter value or a quality score.

If the receiving quality of the uplink signal is a quality score, that the network side device obtains a receiving quality of the uplink signal may include:
obtaining, by the network side device, a quality parameter value of the uplink signal; and
calculating a quality score based on the quality parameter value.

How the network side device obtains various quality parameter values of the uplink signal may be implemented by using a related method in the conventional technology, and details are not described herein again.

The calculating a quality score based on the quality parameter value may include: multiplying a preset score of each quality parameter value by a weight value corresponding to the quality parameter value, and then calculating a sum of products to obtain the quality score.

For example, a weight occupied by each quality parameter is preset. It is assumed that the quality parameter includes: a receive power of the uplink signal and an MCS order. If a weight of the MCS order is 3, different orders correspond to different scores, for example, a first order is 0.8, and a second order is 0.9. If a weight of the receive power of the uplink signal is 2, different powers correspond to different scores, for example, a first power is 0.5, and a second power is 0.6. In this case, if the MCS order of the uplink signal obtained by the network side is the first order, and the receive power is the first power, the quality score may be calculated as follows: 3^{∗}0.8+2^{∗}0.5=3.4.

Step 505: The electronic device receives the receiving quality of the tuning status combination, determines whether the receiving quality meets a preset condition, and performs step 508 if the receiving quality meets the preset condition, or performs step 506 if the receiving quality does not meet the preset condition.

If the receiving quality received by the electronic device is a quality score, the determining whether the receiving quality meets a preset condition includes: determining whether the quality score exceeds a preset score threshold. A specific value of the score threshold may be autonomously set in actual application. This is not limited in this embodiment of this application.

If the receiving quality received by the electronic device is a quality parameter value, the determining whether the received receiving quality meets a preset condition may include:
determining whether each quality parameter value meets a preset condition corresponding to the quality parameter value; or
calculating a quality score based on the quality parameter value, and determining whether the calculated quality score exceeds a preset score threshold.

When it is determined, based on each quality parameter value, whether the preset condition is met, a corresponding preset condition may be separately set for each quality parameter. For example, the receive power of the uplink signal needs to be greater than a preset power threshold, and the MCS order needs to be greater than a preset order.

For a specific implementation of calculating the quality score based on the quality parameter value, refer to related descriptions in step 504. Details are not described herein again.

Step 506: The electronic device determines whether the uplink signal is transmitted based on each tuning status combination by using the N antennas, and if yes, performs step 507, or if no, returns to step 503, and continues to transmit the uplink signal based on a next tuning status combination by using the N antennas.

Step 507: Select a tuning status combination with an optimal receiving quality from all tuning status combinations of the N antennas, and set the tuning statuses of the N antennas to tuning statuses in the selected tuning status combination. This branch process ends.

If the receiving quality is: a quality parameter value, and the electronic device does not calculate a corresponding quality score in step 505, in a possible implementation, different priorities may be set for each quality parameter. In this case, comparison starts from a quality parameter value of a quality parameter with a higher priority, to select a receiving quality corresponding to a quality parameter value that represents an optimal receiving quality. If there are two or more receiving parameters, comparison starts from a quality parameter value of a quality parameter with a second highest priority, and so on, until an optimal receiving quality is selected. For example, it is assumed that the receiving quality includes a receive power of the uplink signal, an MCS order, and a quantity of RBs, a priority sequence is as follows: MCS order, receive power of the uplink signal, and quantity of RBs. If receiving qualities with four tuning status combinations are referred to as a receiving quality 1 to a receiving quality 4, MCS orders of the receiving quality 1 and the receiving quality 2 are the same and higher than MCS orders of the receiving quality 3 and the receiving quality 4, the receiving quality 1 and the receiving quality 2 are selected. If a receive power of the uplink signal for the receiving quality 1 is higher than a receive power of the uplink signal for the receiving quality 2, the receiving quality 1 is selected as the optimal receiving quality. If a receive power of the uplink signal for the receiving quality 1 and the receiving quality 2 is the same, a quantity of RBs for the receiving quality 1 is compared with a quantity of RBs for the receiving quality 2 until the optimal receiving quality is selected. If there are two or more optimal receiving qualities, one of them can be randomly selected as the optimal receiving quality.

If the receiving quality is a quality parameter value, and the electronic device calculates a corresponding quality score in step 505, the selecting a tuning status combination with an optimal receiving quality in this step may include: selecting a tuning status combination with a highest quality score.

If the receiving quality is a quality score, the selecting a tuning status combination with an optimal receiving quality in this step may include: selecting a tuning status combination with a highest quality score.

Step 508: End step 503, set the tuning statuses of the N antennas to tuning statuses in the tuning status combination. This branch process ends.

For an implementation of the steps in FIG. 5, refer to related descriptions in the embodiments shown in FIG. 2 to FIG. 4. Details are not described herein again.

According to the method shown in FIG. 5, the tuning status combination that meets the preset condition is quickly selected from the tuning status combinations of N antennas, and the tuning statuses of the N antennas are correspondingly set, to quickly tune the N antennas in the electronic device, and achieve better communication quality between the electronic device and the network side device such as a base station.

In this embodiment, after the electronic device transmits the uplink signal based on one tuning status combination by using the N antennas in step 503, the network side device sends the receiving quality of the one tuning status combination to the electronic device in step 504, and then returns to step 503 only when a determining result in step 506 is no, and the electronic device transmits the uplink signal based on a next tuning status combination by using the N antennas, and so on.

In an actual application, in step 503, the electronic device transmits an uplink signal based on one tuning status combination by using the N antennas. For the tuning status combination, regardless of whether the electronic device receives the receiving quality of the tuning status combination sent by the network side device, the electronic device may continue to transmit an uplink signal based on a next tuning status combination by using the N antennas until the tuning status combinations of the N antennas are traversed or the receiving quality of a tuning status combination received by the electronic device meets the preset condition. The tuning statuses of the N antennas are set to tuning statuses in the tuning status combination.

Alternatively, an execution sequence relationship between step 503 and a subsequent step may be extended to various possible implementations such as sending, by the network side device, a receiving quality of two or more groups of tuning status combinations to the electronic device each time. Details are not described herein again.

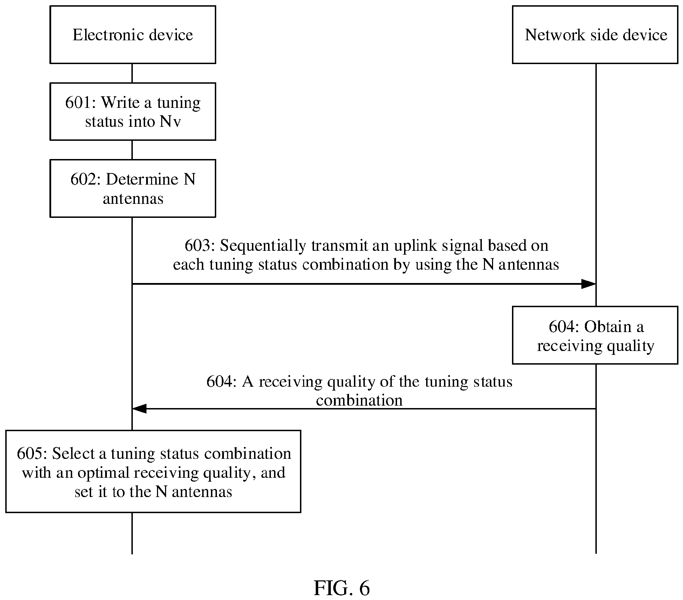

FIG. 6 is a flowchart of still another embodiment of an antenna tuning method according to this application. As shown in FIG. 6, the antenna tuning method may include the following steps.

Step 601: For each antenna of an electronic device, preset different tuning statuses of the antenna, and write the different tuning statuses into Nv of the antenna.

Step 602: When detecting a change in a communication environment, the electronic device determines, from M antennas, N antennas that need to be currently used, where M is a total quantity of antennas of the electronic device, and M≥N.

Step 603: The electronic device sequentially transmits an uplink signal based on each tuning status combination by using the N antennas.

Step 604: The network side device receives the uplink signal, obtains a receiving quality of the uplink signal, and sends the receiving quality as a receiving quality of the tuning status combination corresponding to the uplink signal to the electronic device.

The receiving quality in this step may include but is not limited to a quality parameter value or a quality score.

If the receiving quality is a quality score, the obtaining a receiving quality of the uplink signal may include:
obtaining a quality parameter value of the uplink signal; and
calculating a quality score based on the quality parameter value.

For details about how to calculate the quality score based on the quality parameter value, refer to related descriptions in FIG. 5. Details are not described herein again.

Step 605: After sequentially transmitting an uplink signal based on each tuning status combination by using the N antennas, the electronic device selects a tuning status combination with an optimal receiving quality from all tuning status combinations, and sets the tuning statuses of the N antennas to tuning statuses in the selected tuning status combination with the optimal receiving quality.

If the receiving quality in this step is a quality parameter value, for a specific implementation of selecting a tuning status combination with an optimal receiving quality from all tuning status combinations, refer to related descriptions in step 507, and the tuning status combination with the optimal receiving quality is selected based on a priority of a quality parameter.

The selecting a tuning status combination with an optimal receiving quality from all tuning status combinations may include: calculating a quality score based on the quality parameter value, and selecting a tuning status combination with a highest quality score.

For details about how to calculate the quality score based on the quality parameter value, refer to related descriptions in FIG. 5. Details are not described herein again.

For an implementation of the steps in FIG. 6, refer to related descriptions in the embodiments shown in FIG. 2 to FIG. 5. Details are not described herein again.

According to the method shown in FIG. 6, the electronic device quickly selects the tuning status combination with the optimal receiving quality from the tuning status combinations of the N antennas, and correspondingly sets the tuning statuses of the N antennas, to quickly tune the N antennas in the electronic device, and achieve optimal communication quality between the electronic device and the network side device such as a base station.

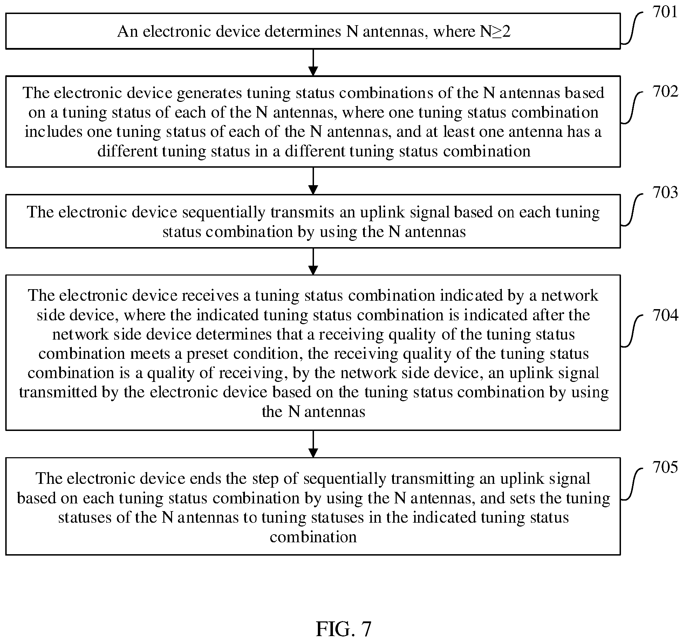

FIG. 7 is a flowchart of still another embodiment of an antenna tuning method according to this application. As shown in FIG. 7, the antenna tuning method may include the following steps.

Step 701: An electronic device determines N antennas, where N≥2.

Step 702: The electronic device generates tuning status combinations of the N antennas based on a tuning status of each of the N antennas. One tuning status combination includes one tuning status of each of the N antennas, and at least one antenna has a different tuning status in a different tuning status combination.

Step 703: The electronic device sequentially transmits an uplink signal based on each tuning status combination by using the N antennas.

Step 704: The electronic device receives a tuning status combination indicated by the network side device. The indicated tuning status combination is indicated after the network side device determines that a receiving quality of the tuning status combination meets a preset condition. The receiving quality of the tuning status combination is a quality of receiving, by the network side device, an uplink signal transmitted by the electronic device based on the tuning status combination by using the N antennas.

Step 705: The electronic device ends the step of sequentially transmitting an uplink signal based on each tuning status combination by using the N antennas, and sets the tuning statuses of the N antennas to tuning statuses in the indicated tuning status combination.

For an implementation of the steps in FIG. 7, refer to related descriptions in the embodiments shown in FIG. 2 to FIG. 6. Details are not described herein again.

In the method shown in FIG. 7, the network side device selects the tuning status combination whose receiving quality meets the preset condition for the electronic device and indicates the selected tuning status combination to the electronic device, and the electronic device correspondingly sets the tuning statuses of the N antennas, to quickly tune the N antennas in the electronic device, and achieve better communication quality between the electronic device and the network side device such as a base station.

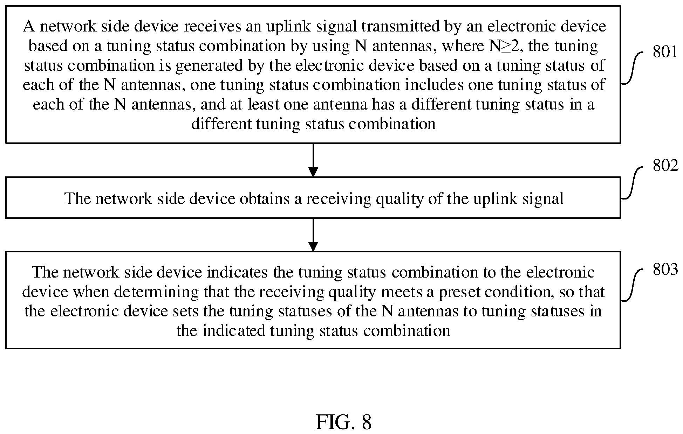

FIG. 8 is a flowchart of still another embodiment of an antenna tuning method according to this application. As shown in FIG. 8, the antenna tuning method may include the following steps.

Step 801: A network side device receives an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

Step 802: The network side device obtains a receiving quality of the uplink signal.

Step 803: The network side device indicates the tuning status combination to the electronic device when determining that the receiving quality meets a preset condition, so that the electronic device sets the tuning statuses of the N antennas to tuning statuses in the indicated tuning status combination.

For an implementation of the steps in FIG. 8, refer to related descriptions in the embodiments shown in FIG. 2 to FIG. 7. Details are not described herein again.

In the method shown in FIG. 8, the network side device selects the tuning status combination whose receiving quality meets the preset condition and indicates the selected tuning status combination to the electronic device, so that the electronic device may set the tuning statuses of the N antennas to the tuning statuses in the indicated tuning status combination. The network side device may cooperate with the electronic device to quickly select, from the tuning status combinations of the N antennas, the tuning status combination whose receiving quality meets the preset condition, and indicate the electronic device to correspondingly set the tuning statuses of the N antennas, so as to quickly tune the N antennas in the electronic device, and achieve better communication quality between the electronic device and the network side device.

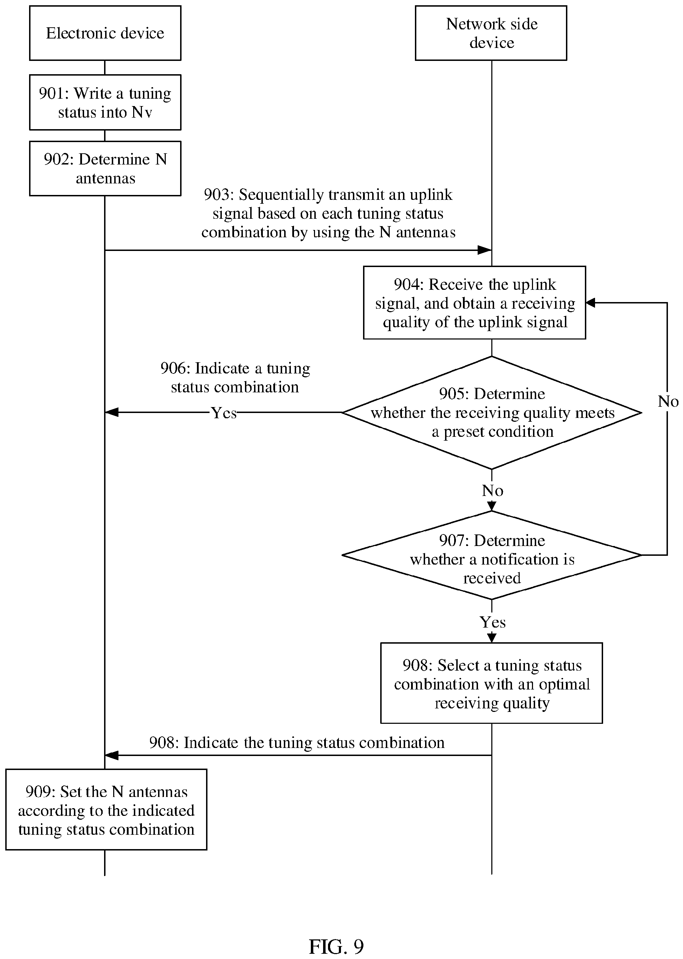

The following describes the embodiments shown in FIG. 7 and FIG. 8 by using FIG. 9 as an example.

FIG. 9 is a flowchart of still another embodiment of an antenna tuning method according to this application. As shown in FIG. 9, the antenna tuning method may include the following steps.

Step 901: For each antenna of an electronic device, preset at least one tuning status of the antenna, and write the tuning status into Nv of the antenna.

Step 902: When detecting a change in a communication environment, the electronic device determines, from M antennas, N antennas that need to be currently used, where M is a total quantity of antennas of the electronic device, and M≥N.

Step 903: The electronic device sequentially transmits an uplink signal based on each tuning status combination by using the N antennas.

This step may further include: after the electronic device transmits the uplink signal based on each tuning status combination of the N antennas, if the electronic device does not receive an indication about the tuning status combination from a network side device, sending, to the network side device, a notification that transmission of the uplink signals based on the tuning status combinations ends.

The notification may be sent after an uplink signal corresponding to the last tuning status combination is sent, or may be carried in an uplink signal corresponding to the last tuning status combination.

Step 904: The network side device receives the uplink signal, and obtains a receiving quality of the uplink signal.

For a specific implementation of this step, refer to the description in step 504. Details are not described herein again.

Step 905: The network side device determines whether the receiving quality meets a preset condition, and if the receiving quality meets the preset condition, performs step 906, or if the receiving quality does not meet the preset condition, performs step 907.

For an implementation of this step, refer to the description in step 505. A difference lies only in that an execution body is changed from the electronic device to the network side device.

Step 906: The network side device indicates, to the electronic device, a tuning status combination corresponding to the receiving quality that meets the preset condition, and performs step 909.

Step 907: The network side device determines whether a notification that transmission of the uplink signals, sent by the electronic device, based on the tuning status combinations ends is received, and if the notification is received, performs step 908; or, if the notification is not received, returns to step 904, and continues to receive the uplink signal.

Step 908: The network side device selects a tuning status combination corresponding to an optimal receiving quality, indicates the selected tuning status combination to the electronic device, and performs step 909.

For a specific implementation of selecting, by the network side device, the tuning status combination corresponding to the optimal receiving quality, refer to related descriptions in FIG. 5 and FIG. 6. The only difference lies in that the execution body is changed from the electronic device to the network side device.

Step 909: Set the tuning statuses of the N antennas to tuning statuses in a tuning status combination indicated by the network side device.

If step 909 is performed after step 906, step 909 may further include: ending step 903.

For an implementation of the steps in FIG. 9, refer to related descriptions in the embodiments shown in FIG. 2 to FIG. 8. Details are not described herein again.

In the method shown in FIG. 9, the network side device selects the tuning status combination whose receiving quality meets the preset condition and indicates the selected tuning status combination to the electronic device, to quickly tune the N antennas in the electronic device, and achieve better communication quality between the electronic device and the network side device.

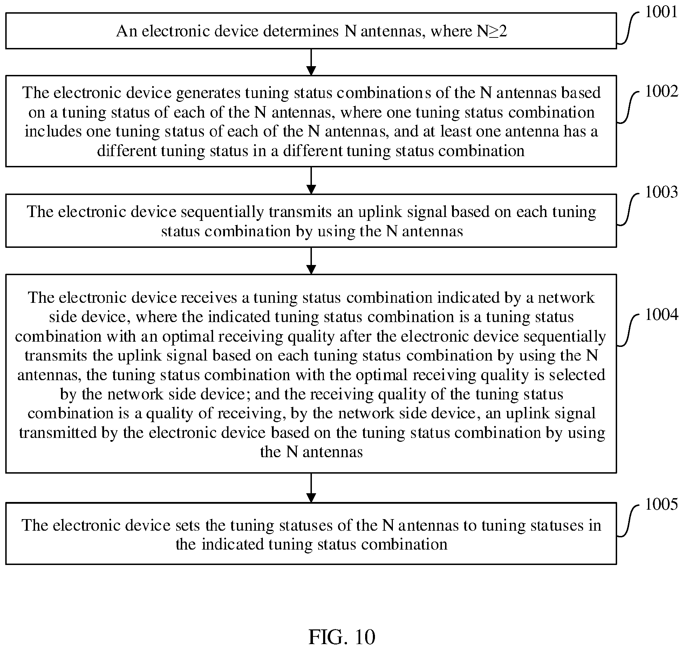

FIG. 10 is a flowchart of still another embodiment of an antenna tuning method according to this application. As shown in FIG. 10, the antenna tuning method may include the following steps.

Step 1001: An electronic device determines N antennas, where N≥2.

Step 1002: The electronic device generates tuning status combinations of the N antennas based on a tuning status of each of the N antennas, where one tuning status combination includes one tuning status of each of the N antennas, and at least one antenna has a different tuning status in a different tuning status combination.

Step 1003: The electronic device sequentially transmits an uplink signal based on each tuning status combination by using the N antennas.

Step 1004: The electronic device receives a tuning status combination indicated by a network side device. The indicated tuning status combination is a tuning status combination with an optimal receiving quality after the electronic device sequentially transmits the uplink signal based on each tuning status combination by using the N antennas, where the tuning status combination with the optimal receiving quality is selected by the network side device. A receiving quality of the tuning status combination is a quality of receiving, by the network side device, an uplink signal transmitted by the electronic device based on the tuning status combination by using the N antennas.

Step 1005: The electronic device sets the tuning statuses of the N antennas to tuning statuses in the indicated tuning status combination.

For an implementation of the steps in FIG. 10, refer to related descriptions in the embodiments shown in FIG. 2 to FIG. 9. Details are not described herein again.

In the method shown in FIG. 10, the network side device selects the tuning status combination with the optimal receiving quality and indicates the selected tuning status combination to the electronic device, and the electronic device correspondingly sets the tuning statuses of the N antennas, to quickly tune the N antennas in the electronic device, and achieve optimal communication quality between the electronic device and the network side device.

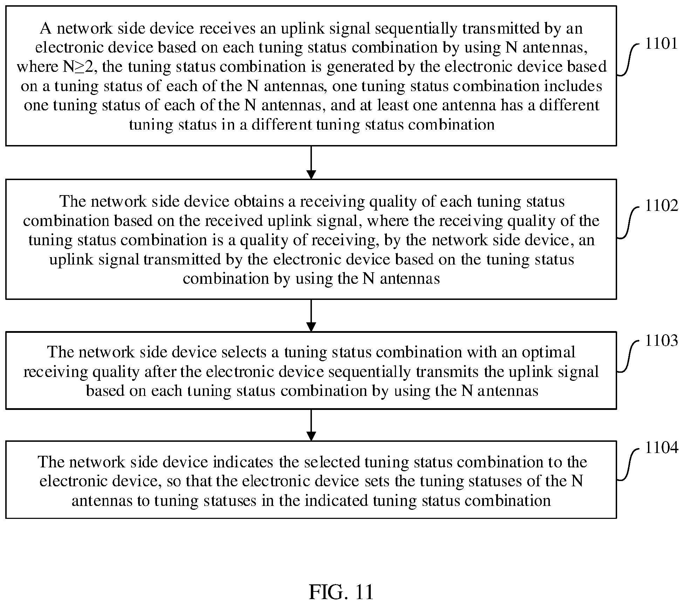

FIG. 11 is a flowchart of still another embodiment of an antenna tuning method according to this application. As shown in FIG. 11, the antenna tuning method may include the following steps.

Step 1101: A network side device receives an uplink signal sequentially transmitted by an electronic device based on each tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

Step 1102: The network side device obtains a receiving quality of each tuning status combination based on the received uplink signal. The receiving quality of the tuning status combination is a quality of receiving, by the network side device, an uplink signal transmitted by the electronic device based on the tuning status combination by using the N antennas.

Step 1103: The network side device selects a tuning status combination with an optimal receiving quality after the electronic device sequentially transmits the uplink signal based on each tuning status combination by using the N antennas.

Step 1104: The network side device indicates the selected tuning status combination to the electronic device, so that the electronic device sets the tuning statuses of the N antennas to tuning statuses in the indicated tuning status combination.

For an implementation of the steps in FIG. 11, refer to related descriptions in the embodiments shown in FIG. 2 to FIG. 10. Details are not described herein again.

In the method shown in FIG. 11, the network side device selects the tuning status combination with the optimal receiving quality and indicates the selected tuning status combination to the electronic device, and the electronic device correspondingly sets the tuning statuses of the N antennas, to quickly tune the N antennas in the electronic device, and achieve optimal communication quality between the electronic device and the network side device.

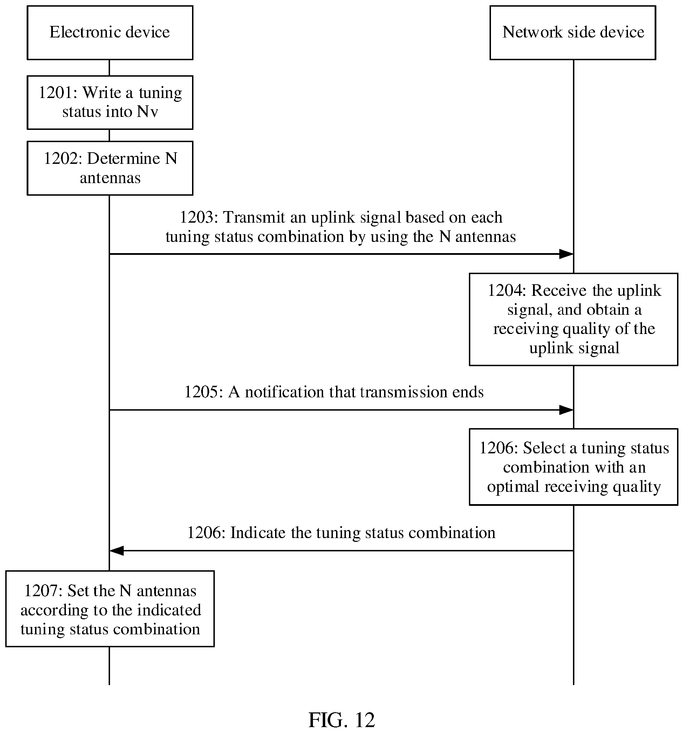

The following describes the embodiments shown in FIG. 10 and FIG. 11 by using FIG. 12 as an example.

FIG. 12 is a flowchart of still another embodiment of an antenna tuning method according to this application. As shown in FIG. 12, the antenna tuning method may include the following steps.

Step 1201: For each antenna of an electronic device, preset at least one tuning status of the antenna, and write the tuning status into Nv of the antenna.

Step 1202: When detecting a change in a communication environment, the electronic device determines, from M antennas, N antennas that need to be currently used, where M is a total quantity of antennas of the electronic device, and M≥N.

Step 1203: The electronic device sequentially transmits an uplink signal based on each tuning status combination by using the N antennas.

Step 1204: The network side device receives the uplink signal, and obtains a receiving quality of the uplink signal.

For an implementation of this step, refer to the description in step 504. Details are not described herein again.

Step 1205: After transmitting the uplink signal based on each tuning status combination of the N antennas, the electronic device sends, to the network side device, a notification that transmission of the uplink signals based on the tuning status combinations ends.

The notification may be sent after an uplink signal corresponding to the last tuning status combination is sent, or may be carried in an uplink signal corresponding to the last tuning status combination.

Step 1206: When receiving the notification that transmission of the uplink signals based on the tuning status combinations ends, the network side device selects a tuning status combination corresponding to an optimal receiving quality, and indicates the selected tuning status combination to the electronic device.

For a specific implementation of selecting, by the network side device, the tuning status combination with the optimal receiving quality, refer to related descriptions in step 507 and step 605. The only difference lies in that the execution body is changed from the electronic device to the network side device.

Step 1207: The electronic device receives the tuning status combination indicated by the network side device, and sets the tuning statuses of the N antennas to tuning statuses in the tuning status combination.

For an implementation of the steps in FIG. 12, refer to related descriptions in the embodiments shown in FIG. 2 to FIG. 11. Details are not described herein again.

In the method shown in FIG. 12, the network side device selects the tuning status combination with the optimal receiving quality and indicates the selected tuning status combination to the electronic device, to quickly tune the N antennas in the electronic device, and achieve optimal communication quality between the electronic device and the network side device such as a base station.

It should be noted that in the foregoing embodiments of this application, N≥2 is used as an example for description, and a value of N in this embodiment of this application may alternatively be 1. Therefore, the foregoing method in this embodiment of this application may be applicable to a scenario in which one antenna is used, or may be applicable to a scenario in which a plurality of antennas transmit signals together, for example, in a 2^{∗}2 or 4^{∗}4 uplink MIMO scenario, a tuning status combination that meets a preset condition is quickly selected from the tuning status combinations of the N antennas, and the tuning statuses of the N antennas are correspondingly set. This implements fast tuning of the N antennas in the electronic device, so that overall communication quality is ensured when the N antennas are subsequently used to transmit a signal. In this way, an optimal throughput, coverage, and the like in a multi-antenna transmission scenario is achieved.

It may be understood that some or all of the steps or operations in the foregoing embodiments are merely examples. In embodiments of this application, other operations or variations of various operations may be further performed. In addition, the steps may be performed in a sequence different from that presented in the foregoing embodiments, and not all operations in the foregoing embodiments may need to be performed.

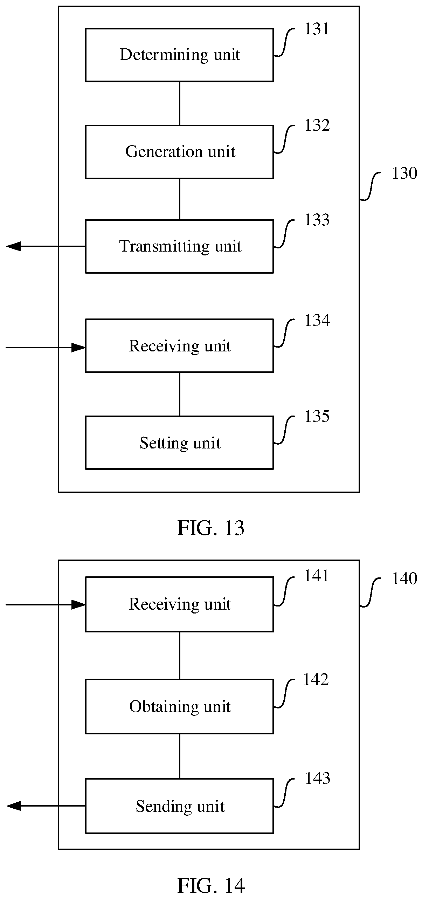

FIG. 13 is a schematic diagram of a structure of an antenna tuning apparatus according to an embodiment of this application. As shown in FIG. 13, an apparatus 130 may include a determining unit 131, a generation unit 132, a transmitting unit 133, a receiving unit 134, and a setting unit 135.

In an embodiment:

The determining unit 131 is configured to determine N antennas, where N≥2.

The generation unit 132 is configured to generate tuning status combinations of the N antennas based on a tuning status of each of the N antennas. One tuning status combination includes one tuning status of each of the N antennas, and at least one antenna has a different tuning status in a different tuning status combination.

The transmitting unit 133 is configured to sequentially transmit an uplink signal based on each tuning status combination by using the N antennas.

The receiving unit 134 is configured to receive a receiving quality that is of the tuning status combination and that is sent by a network side device. The receiving quality of the tuning status combination is a quality of receiving, by the network side device, an uplink signal transmitted by the apparatus based on the tuning status combination by using the N antennas.

The setting unit 135 is configured to: when determining that a receiving quality of one tuning status combination meets a preset condition, end the step of sequentially transmitting an uplink signal based on each tuning status combination by using the N antennas, and set the tuning statuses of the N antennas to tuning statuses in the one tuning status combination.

The receiving quality is a quality score. The setting unit 135 may be specifically configured to determine that a quality score of one tuning status combination exceeds a preset score threshold.

The receiving quality is a quality parameter value. The setting unit 135 may be specifically configured to: determine that a quality parameter value in one tuning status combination meets a preset condition corresponding to the quality parameter value; or calculate a quality score based on the quality parameter value, and determine that the quality score in the tuning status combination exceeds a preset score threshold.

The quality parameter value may include: a receive power of the uplink signal, and/or linearity of the uplink signal, and/or an error vector magnitude EVM, and/or a quantity of resource blocks RBs, and/or a modulation and coding scheme MCS order, and/or a throughput. The setting unit 135 may be specifically configured to multiply a preset score of each quality parameter value by a weight value corresponding to the quality parameter value, and then calculate a sum of products to obtain the quality score.

The setting unit 135 may be further configured to:
select a tuning status combination with an optimal receiving quality when determining that the receiving quality of each tuning status combination does not meet the preset condition after the uplink signal is sequentially transmitted based on each tuning status combination by using the N antennas; and
set the tuning statuses of the N antennas to tuning statuses in the tuning status combination with the optimal receiving quality.

The tuning status of the antenna may include: a capacitance value, and/or a switch on/off state, and/or an inductance value.

In another embodiment:
The determining unit 131 is configured to determine N antennas, where N≥2.

The generation unit 132 is configured to generate tuning status combinations of the N antennas based on a tuning status of each of the N antennas. One tuning status combination includes one tuning status of each of the N antennas, and at least one antenna has a different tuning status in a different tuning status combination.

The transmitting unit 133 is configured to sequentially transmit an uplink signal based on each tuning status combination by using the N antennas.

The receiving unit 134 is configured to receive a receiving quality that is of each tuning status combination and that is sent by a network side device. The receiving quality of the tuning status combination is a quality of receiving, by the network side device, an uplink signal transmitted by the apparatus based on the tuning status combination by using the N antennas.

The setting unit 135 is configured to select a tuning status combination with an optimal receiving quality, and set the tuning statuses of the N antennas to tuning statuses in the tuning status combination with the optimal receiving quality.

The receiving quality is a quality score. The selection unit 135 may be specifically configured to select a tuning status combination with a highest quality score.

The receiving quality is a quality parameter value. The selection unit 135 may be specifically configured to calculate a quality score based on the quality parameter value, and select a tuning status combination with a highest quality score.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. The selection unit 135 may be specifically configured to multiply a preset score of each quality parameter value by a weight value corresponding to the quality parameter value, and then calculate a sum of products to obtain the quality score.

The tuning status of the antenna includes: a capacitance value, and/or a switch on/off state, and/or an inductance value.

In still another embodiment:
The determining unit 131 is configured to determine N antennas, where N≥2.

The generation unit 132 is configured to generate tuning status combinations of the N antennas based on a tuning status of each of the N antennas. One tuning status combination includes one tuning status of each of the N antennas, and at least one antenna has a different tuning status in a different tuning status combination.

The transmitting unit 133 is configured to sequentially transmit an uplink signal based on each tuning status combination by using the N antennas.

The receiving unit 134 is configured to receive a tuning status combination indicated by a network side device. The indicated tuning status combination is indicated after the network side device determines that a receiving quality of the tuning status combination meets a preset condition, and the receiving quality of the tuning status combination is a quality of receiving an uplink signal by the apparatus when the electronic device transmits the uplink signal based on the tuning status combination by using the N antennas.

The setting unit 135 is configured to end the step that the transmitting unit 133 sequentially transmits an uplink signal based on each tuning status combination by using the N antennas, and set the tuning statuses of the N antennas to tuning statuses in the indicated tuning status combination.

The transmitting unit 133 may be further configured to: sequentially transmit an uplink signal based on each tuning status combination by using the N antennas, and send, to the network side device, a notification that transmission of the uplink signals based on the tuning status combinations ends if the tuning status combination indicated by the network side device is not received.

The receiving unit 134 may be further configured to: receive a tuning status combination with an optimal receiving quality, and set the tuning statuses of the N antennas to tuning statuses in the tuning status combination with the optimal receiving quality, where the tuning status combination with the optimal receiving quality is indicated by the network side device.

The tuning status of the antenna includes: a capacitance value, and/or a switch on/off state, and/or an inductance value.

In still another embodiment:
The determining unit 131 is configured to determine N antennas, where N≥2.

The generation unit 132 is configured to generate tuning status combinations of the N antennas based on a tuning status of each of the N antennas. One tuning status combination includes one tuning status of each of the N antennas, and at least one antenna has a different tuning status in a different tuning status combination.

The transmitting unit 133 is configured to sequentially transmit an uplink signal based on each tuning status combination by using the N antennas.

The receiving unit 134 is configured to receive a tuning status combination indicated by a network side device. The indicated tuning status combination is a tuning status combination with an optimal receiving quality after the apparatus sequentially transmits the uplink signal based on each tuning status combination by using the N antennas, where the tuning status combination with the optimal receiving quality is selected by the network side device. The receiving quality of the tuning status combination is quality of receiving, by the network side device, the uplink signal transmitted by the apparatus based on the tuning status combination by using the N antennas.

The setting unit 135 is configured to set the tuning statuses of the N antennas to tuning statuses in the indicated tuning status combination.

The tuning status of the antenna includes: a capacitance value, and/or a switch on/off state, and/or an inductance value.

FIG. 14 is another schematic diagram of a structure of an antenna tuning apparatus according to an embodiment of this application. As shown in FIG. 14, an apparatus 140 may include a receiving unit 141, an obtaining unit 142, and a sending unit 143.

In an embodiment:
The receiving unit 141 is configured to receive an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The obtaining unit 142 is configured to obtain a receiving quality of the uplink signal.

The sending unit 143 is configured to send the receiving quality as a receiving quality of the one tuning status combination to the electronic device.

The receiving quality of the tuning status combination is a quality score. The obtaining unit 142 may be specifically configured to obtain a quality parameter value of the uplink signal, and calculate a quality score based on the quality parameter value.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. The obtaining unit 142 may be specifically configured to multiply a preset score of each quality parameter value by a weight value corresponding to the quality parameter value, and then calculate a sum of products to obtain the quality score.

The tuning status of the antenna includes: a capacitance value, and/or a switch on/off state, and/or an inductance value.

In another embodiment:
The receiving unit 141 is configured to receive an uplink signal transmitted by an electronic device based on a tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The obtaining unit 142 is configured to obtain a receiving quality of the uplink signal.

The sending unit 143 is configured to: when determining that the receiving quality meets a preset condition, indicate the one tuning status combination to the electronic device, so that the electronic device sets the tuning statuses of the N antennas to tuning statuses in the indicated tuning status combination.

The receiving quality is a quality parameter value. The sending unit 143 may be specifically configured to determine that each quality parameter value meets a preset condition corresponding to the quality parameter value.

The receiving quality is a quality score. The obtaining unit 142 may be specifically configured to obtain a quality parameter value of the uplink signal, and calculate a quality score based on the quality parameter value.

Correspondingly, the sending unit 143 may be specifically configured to determine that the quality score exceeds a preset score threshold.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. The obtaining unit 142 may be specifically configured to multiply a preset score of each quality parameter value by a weight value corresponding to the quality parameter value, and then calculate a sum of products to obtain the quality score.

The sending unit 143 may further be configured to: If the receiving unit 141 receives a notification that transmission of uplink signals, sent by the electronic device, based on the tuning status combination ends, and the sending unit 143 determines that none of receiving qualities meets the preset condition, select a tuning status combination with an optimal receiving quality, and indicates the selected tuning status combination with the optimal receiving quality to the electronic device.

The tuning status of the antenna includes: a capacitance value, and/or a switch on/off state, and/or an inductance value.

In still another embodiment:
The receiving unit 141 is configured to receive an uplink signal sequentially transmitted by an electronic device based on each tuning status combination by using N antennas, where N≥2. The tuning status combination is generated by the electronic device based on a tuning status of each of the N antennas. One tuning status combination includes one tuning status of each of the N antennas, and at least one antenna has a different tuning status in a different tuning status combination.

The obtaining unit 142 is configured to obtain a receiving quality of each tuning status combination based on the received uplink signal. The receiving quality of the tuning status combination is a quality of receiving an uplink signal by a network side device when the electronic device transmits the uplink signal based on the tuning status combination by using the N antennas.

The sending unit 143 is configured to: after the electronic device sequentially transmits the uplink signal based on each tuning status combination by using the N antennas, select a tuning status combination with an optimal receiving quality; and indicate the selected tuning status combination to the electronic device, so that the electronic device sets the tuning statuses of the N antennas to tuning statuses in the indicated tuning status combination.

The receiving quality is a quality score. The sending unit 143 may be specifically configured to select a tuning status combination corresponding to a highest quality score.

The receiving quality is a quality parameter value. The sending unit 143 may be specifically configured to calculate a quality score based on the quality parameter value, and select a tuning status combination corresponding to a highest quality score.

The quality parameter value includes: a receive power of the uplink signal, and/or linearity of the uplink signal, and/or an error vector magnitude EVM, and/or a quantity of resource blocks RBs, and/or a modulation and coding scheme MCS order, and/or a throughput. The sending unit 143 may be specifically configured to multiply a preset score of each quality parameter value by a weight value corresponding to the quality parameter value, and then calculate a sum of products to obtain the quality score.

The tuning status of the antenna includes: a capacitance value, and/or a switch on/off state, and/or an inductance value.

The antenna tuning apparatus provided in the embodiments shown in FIG. 13 and FIG. 14 may be configured to execute the technical solutions in the method embodiments shown in FIG. 2 to FIG. 12 of this application. For implementation principles and technical effects thereof, further refer to related descriptions in the method embodiments.

It should be understood that division of the units of the antenna tuning apparatus shown in FIG. 13 to FIG. 14 is merely logical function division. In actual implementation, all or some of the units may be integrated into one physical entity, or may be physically separated. In addition, all the units may be implemented in a form of software invoked by using a processing element; or may be implemented in a form of hardware; or some units may be implemented in the form of software invoked by using the processing element, and some units are implemented in the form of hardware. For example, the transmitting unit may be an independently disposed processing element, or may be integrated into a chip of an electronic device for implementation. Implementations of the other units are similar thereto. In addition, all or some of the units may be integrated together, or may be implemented independently. In an implementation process, steps of the foregoing method or the foregoing units may be implemented by using a hardware integrated logical circuit in a processor element, or by using instructions in the form of software.

For example, the foregoing units may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs). For another example, the units may be integrated together and implemented in a form of a system-on-a-chip (system-on-a-chip, SOC).

An embodiment of this application further provides an electronic device. The electronic device may include one or more processors, a memory, a plurality of application programs, and one or more computer programs.

The electronic device may further include a display. The display may include a display of an in-vehicle computer (mobile data center). The electronic device may be a device such as a mobile electronic device (mobile phone), a smart screen, an unmanned aerial vehicle, an intelligent connected vehicle (intelligent connected vehicle, ICV), a smart/intelligent car (smart/intelligent car), or an in-vehicle device.

In a possible implementation, the one or more computer programs are stored in the foregoing memory, the one or more computer programs include instructions, and when the instructions are executed by the device, the device is enabled to perform the methods shown in FIG. 2 to FIG. 12.

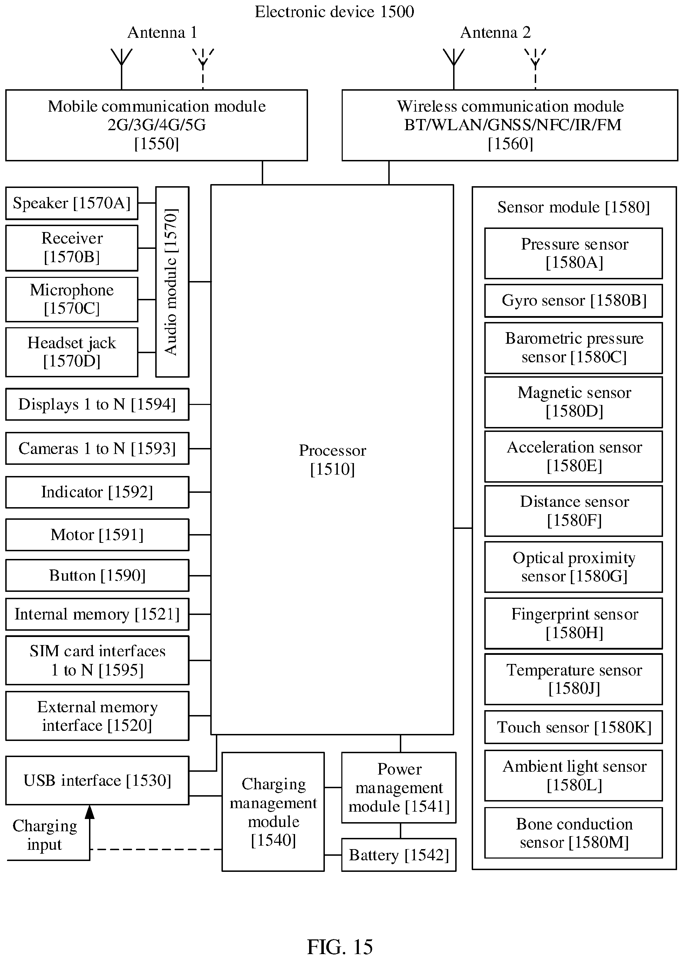

As shown in FIG. 15, an embodiment of this application further provides another electronic device. The electronic device may be configured to perform functions/steps in the methods provided in the embodiments shown in FIG. 2 to FIG. 12 of this application.

An electronic device 1500 includes a processor 1510, an external memory interface 1520, an internal memory 1521, a universal serial bus (universal serial bus, USB) interface 1530, a charging management module 1540, a power management module 1541, a battery 1542, an antenna 1, an antenna 2, a mobile communication module 1550, a wireless communication module 1560, an audio module 1570, a speaker 1570A, a receiver 1570B, a microphone 1570C, a headset jack 1570D, a sensor module 1580, a button 1590, a motor 1591, an indicator 1592, a camera 1593, a display 1594, a subscriber identification module (subscriber identification module, SIM) card interface 1595, and the like. The sensor module 1580 may include a pressure sensor 1580A, a gyro sensor 1580B, a barometric pressure sensor 1580C, a magnetic sensor 1580D, an acceleration sensor 1580E, a distance sensor 1580F, an optical proximity sensor 1580G, a fingerprint sensor 1580H, a temperature sensor 1580J, a touch sensor 1580K, an ambient light sensor 1580L, a bone conduction sensor 1580M, and the like.

It may be understood that the structure shown in this embodiment of the present invention does not constitute a specific limitation on the electronic device 1500. In some other embodiments of this application, the electronic device 1500 may include more or fewer components than those shown in the figure, or some components may be combined, or some components may be split, or different component arrangements may be used. The components shown in the figure may be implemented by hardware, software, or a combination of software and hardware.

The processor 1510 may include one or more processing units. For example, the processor 1510 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 1510, and is configured to store instructions and data. In some embodiments, the memory in the processor 1510 is a cache. The memory may store instructions or data just used or cyclically used by the processor 1510. If the processor 1510 needs to use the instructions or the data again, the processor 1510 may directly invoke the instructions or the data from the memory. This avoids repeated access and reduces a waiting time of the processor 1510, thereby improving system efficiency.

In some embodiments, the processor 1510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 1510 may include a plurality of groups of I2C buses. The processor 1510 may be separately coupled to the touch sensor 1580K, a charger, a flash, the camera 1593, and the like through different I2C bus interfaces. For example, the processor 1510 may be coupled to the touch sensor 1580K through the I2C interface, so that the processor 1510 communicates with the touch sensor 1580K through the I2C bus interface, to implement a touch function of the electronic device 1500.

The I2S interface may be configured to perform audio communication. In some embodiments, the processor 1510 may include a plurality of groups of I2S buses. The processor 1510 may be coupled to the audio module 1570 through an I2S bus, to implement communication between the processor 1510 and the audio module 1570. In some embodiments, the audio module 1570 may transmit an audio signal to the wireless communication module 1560 through the I2S interface, to implement a function of answering a call through a Bluetooth headset.

The PCM interface may also be used to perform audio communication, and sample, quantize, and code an analog signal. In some embodiments, the audio module 1570 may be coupled to the wireless communication module 1560 through a PCM bus interface. In some embodiments, the audio module 1570 may alternatively transmit an audio signal to the wireless communication module 1560 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 1510 to the wireless communication module 1560. For example, the processor 1510 communicates with a Bluetooth module in the wireless communication module 1560 through the UART interface, to implement a Bluetooth function. In some embodiments, the audio module 1570 may transmit an audio signal to the wireless communication module 1560 through the UART interface, to implement a function of playing music through a Bluetooth headset.

The MIPI interface may be configured to connect the processor 1510 to peripheral components such as the display 1594 and the camera 1593. The MIPI interface includes a camera serial interface (camera serial interface, CSI), a display serial interface (display serial interface, DSI), and the like. In some embodiments, the processor 1510 communicates with the camera 1593 through the CSI, to implement a photographing function of the electronic device 1500. The processor 1510 communicates with the display 1594 through the DSI interface, to implement a display function of the electronic device 1500.

The GPIO interface may be configured by software. The GPIO interface may be configured as a control signal or a data signal. In some embodiments, the GPIO interface may be configured to connect the processor 1510 to the camera 1593, the display 1594, the wireless communication module 1560, the audio module 1570, the sensor module 1580, and the like. The GPIO interface may alternatively be configured as an I2C interface, an I2S interface, a UART interface, an MIPI interface, or the like.

The USB interface 1530 is an interface that conforms to a USB standard specification, and may be specifically a mini USB interface, a micro USB interface, a USB type-C interface, or the like. The USB interface 1530 may be configured to connect to a charger to charge the electronic device 1500, may be configured to transmit data between the electronic device 1500 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 1500. In some other embodiments of this application, the electronic device 1500 may alternatively use an interface connection manner different from that in the foregoing embodiment, or use a combination of a plurality of interface connection manners.

The charging management module 1540 is configured to receive a charging input from the charger. The charger may be a wireless charger or a wired charger. In some embodiments in which wired charging is used, the charging management module 1540 may receive a charging input from the wired charger through the USB interface 1530. In some embodiments of wireless charging, the charging management module 1540 may receive a wireless charging input through a wireless charging coil of the electronic device 1500. The charging management module 1540 may further supply power to the electronic device through the power management module 1541 while charging the battery 1542.

The power management module 1541 is configured to connect to the battery 1542, the charging management module 1540, and the processor 1510. The power management module 1541 receives an input from the battery 1542 and/or the charging management module 1540, and supplies power to the processor 1510, the internal memory 1521, the display 1594, the camera 1593, the wireless communication module 1560, and the like. The power management module 1541 may be further configured to monitor parameters such as a battery capacity, a battery cycle count, and a battery health status (electric leakage or impedance). In some other embodiments, the power management module 1541 may alternatively be disposed in the processor 1510. In some other embodiments, the power management module 1541 and the charging management module 1540 may alternatively be disposed in a same component.

A wireless communication function of the electronic device 1500 may be implemented through the antenna 1, the antenna 2, the mobile communication module 1550, the wireless communication module 1560, the modem processor, the baseband processor, and the like.

The antenna 1 and the antenna 2 are configured to transmit and receive an electromagnetic wave signal. Each antenna in the electronic device 1500 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 1550 may provide a solution applied to the electronic device 1500 for wireless communication such as 2G/3G/4G/5G. The mobile communication module 1550 may include at least one filter, a switch, a power amplifier, a low noise amplifier (low noise amplifier, LNA), and the like. The mobile communication module 1550 may receive an electromagnetic wave through the antenna 1, perform processing such as filtering or amplification on the received electromagnetic wave, and transmit a processed electromagnetic wave to the modem processor for demodulation. The mobile communication module 1550 may further amplify a signal modulated by the modem processor, and convert an amplified signal into an electromagnetic wave for radiation through the antenna 1. In some embodiments, at least some function modules in the mobile communication module 1550 may be disposed in the processor 1510. In some embodiments, at least some function modules in the mobile communication module 1550 may be disposed in a same component as at least some modules in the processor 1510.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 1570A, the receiver 1570B, or the like), or displays an image or a video by the display 1594. In some embodiments, the modem processor may be an independent component. In some other embodiments, the modem processor may be independent of the processor 1510, and is disposed in a same component as the mobile communication module 1550 or another functional module.

The wireless communication module 1560 may provide a solution to wireless communication applied to the electronic device 1500, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 1560 may be one or more components integrating at least one communication processing module. The wireless communication module 1560 receives an electromagnetic wave through the antenna 2, performs frequency modulation and filtering processing on the electromagnetic wave signal, and sends a processed signal to the processor 1510. The wireless communication module 1560 may further receive a to-be-sent signal from the processor 1510, perform frequency modulation and amplification on the signal, and convert a processed signal into an electromagnetic wave for radiation through the antenna 2.

In some embodiments, in the electronic device 1500, the antenna 1 and the mobile communication module 1550 are coupled, and the antenna 2 and the wireless communication module 1560 are coupled, so that the electronic device 1500 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 1500 implements a display function through the GPU, the display 1594, the application processor, and the like. The GPU is a microprocessor for image processing, and is connected to the display 1594 and the application processor. The GPU is configured to: perform mathematical and geometric computation, and render an image. The processor 1510 may include one or more GPUs, which execute program instructions to generate or change display information.

The display 1594 is configured to display an image, a video, and the like. The display 1594 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 1500 may include one or N displays 1594, where N is a positive integer greater than 1.

The electronic device 1500 can implement a photographing function through the ISP, the camera 1593, the video codec, the GPU, the display 1594, the application processor, and the like.

The ISP is configured to process data fed back by the camera 1593. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 1593.

The camera 1593 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 1500 may include one or N cameras 1593, where N is a positive integer greater than 1.

The digital signal processor is configured to process a digital signal, and may process another digital signal in addition to the digital image signal. For example, when the electronic device 1500 selects a frequency, the digital signal processor is configured to perform Fourier transformation on frequency energy.

The video codec is configured to compress or decompress a digital video. The electronic device 1500 may support one or more video codecs. In this way, the electronic device 1500 may play back or record videos in a plurality of coding formats, for example, moving picture experts group (moving picture experts group, MPEG)1, MPEG2, MPEG3, and MPEG4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 1500 may be implemented through the NPU, for example, image recognition, facial recognition, speech recognition, and text understanding.

The external memory interface 1520 may be configured to connect to an external storage card such as a micro SD card, to extend a storage capability of the electronic device 1500. The external memory card communicates with the processor 1510 through the external memory interface 1520, to implement a data storage function. For example, files such as music and videos are stored in the external storage card.

The internal memory 1521 may be configured to store computer-executable program code, and the executable program code includes instructions. The internal memory 1521 may include a program storage area and a data storage area. The program storage area may store an operating system, an application required by at least one function (for example, a voice playing function or an image playing function), and the like. The data storage area may store data (such as audio data and an address book) created during use of the electronic device 1500, and the like. In addition, the internal memory 1521 may include a high-speed random access memory, or may include a non-volatile memory, for example, at least one magnetic disk storage device, a flash memory, or a universal flash storage (universal flash storage, UFS). The processor 1510 runs instructions stored in the internal memory 1521 and/or instructions stored in the memory disposed in the processor, to perform various function applications and data processing of the electronic device 1500.

The electronic device 1500 may implement an audio function through the audio module 1570, the speaker 1570A, the receiver 1570B, the microphone 1570C, the headset jack 1570D, the application processor, and the like. For example, the audio function may be music playing, recording, and the like.

The audio module 1570 is configured to convert digital audio information into an analog audio signal for output, and is also configured to convert analog audio input into a digital audio signal. The audio module 1570 may be further configured to code and decode an audio signal. In some embodiments, the audio module 1570 may be disposed in the processor 1510, or some functional modules in the audio module 1570 are disposed in the processor 1510.

The speaker 1570A, also referred to as a "loudspeaker", is configured to convert an audio electrical signal into a sound signal. The electronic device 1500 may be used to listen to music or answer a call in a hands-free mode over the speaker 1570A.

The receiver 1570B, also referred to as an "earpiece", is configured to convert an electrical audio signal into a sound signal. When a call is answered or speech information is received through the electronic device 1500, the receiver 1570B may be put close to a human ear to listen to a voice.

The microphone 1570C, also referred to as a "mike" or a "mic", is configured to convert a sound signal into an electrical signal. When making a call or sending a voice message, a user may make a sound near the microphone 1570C through the mouth of the user, to input a sound signal to the microphone 1570C. The electronic device 1500 may be provided with at least one microphone 1570C. In some other embodiments, two microphones 1570C may be disposed in the electronic device 1500, to collect a sound signal and implement a noise reduction function. In some other embodiments, three, four, or more microphones 1570C may alternatively be disposed in the electronic device 1500, to collect a sound signal, implement noise reduction, and identify a sound source, so as to implement a directional recording function and the like.

The headset jack 1570D is configured to connect to a wired headset. The headset jack 1570D may be a USB interface 1530, or may be a 3.5 mm open mobile terminal platform (open mobile terminal platform, OMTP) standard interface or cellular telecommunication industry association of the USA (cellular telecommunication industry association of the USA, CTIA) standard interface.

The pressure sensor 1580A is configured to sense a pressure signal, and can convert the pressure signal into an electrical signal. In some embodiments, the pressure sensor 1580A may be disposed on the display 1594. There are a plurality of types of pressure sensors 1580A, such as a resistive pressure sensor, an inductive pressure sensor, and a capacitive pressure sensor. The capacitive pressure sensor may include at least two parallel plates made of a conductive material. When a force is applied to the pressure sensor 1580A, capacitance between electrodes changes. The electronic device 1500 determines pressure intensity based on the change in the capacitance. When a touch operation is performed on the display 1594, the electronic device 1500 detects intensity of the touch operation through the pressure sensor 1580A. The electronic device 1500 may also calculate a touch location based on a detection signal of the pressure sensor 1580A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the short message service message application icon, an instruction for creating a new short message service message is performed.

The gyro sensor 1580B may be configured to determine a moving posture of the electronic device 1500. In some embodiments, an angular velocity of the electronic device 100 around three axes (namely, axes x, y, and z) may be determined through the gyro sensor 1580B. The gyro sensor 1580B may be configured to implement image stabilization during photographing. For example, when the shutter is pressed, the gyro sensor 1580B detects an angle at which the electronic device 1500 jitters, calculates, based on the angle, a distance for which a lens module needs to compensate, and allows the lens to cancel the jitter of the electronic device 1500 through reverse motion, to implement image stabilization. The gyro sensor 1580B may also be used in a navigation scenario and a somatic game scenario.

The barometric pressure sensor 1580C is configured to measure barometric pressure. In some embodiments, the electronic device 1500 calculates an altitude through the barometric pressure measured by the barometric pressure sensor 1580C, to assist in positioning and navigation.

The magnetic sensor 1580D includes a Hall sensor. The electronic device 1500 may detect opening and closing of a flip cover by using the magnetic sensor 1580D. In some embodiments, when the electronic device 1500 is a clamshell phone, the electronic device 1500 may detect opening and closing of a flip cover based on the magnetic sensor 1580D. Further, a feature such as automatic unlocking of the flip cover is set based on a detected opening or closing state of the leather case or a detected opening or closing state of the flip cover.

The acceleration sensor 1580E may detect accelerations in various directions (usually on three axes) of the electronic device 1500. When the electronic device 1500 is still, a magnitude and a direction of gravity may be detected. The acceleration sensor 1580E may be further configured to identify a posture of the electronic device, and is used in an application such as switching between a landscape mode and a portrait mode or a pedometer.

The distance sensor 1580F is configured to measure a distance. The electronic device 1500 may measure the distance in an infrared manner or a laser manner. In some embodiments, in a photographing scenario, the electronic device 1500 may measure a distance through the distance sensor 1580F to implement quick focusing.

The optical proximity sensor 1580G may include, for example, a light emitting diode (LED) and an optical detector, for example, a photodiode. The light emitting diode may be an infrared light emitting diode. The electronic device 1500 emits infrared light by using the light emitting diode. The electronic device 1500 detects infrared reflected light from a nearby object through the photodiode. When sufficient reflected light is detected, it may be determined that there is an object near the electronic device 1500. When insufficient reflected light is detected, the electronic device 1500 may determine that there is no object near the electronic device 1500. The electronic device 1500 may detect, by using the optical proximity sensor 1580G, that the user holds the electronic device 1500 close to an ear for a call, to automatically turn off a screen for power saving. The optical proximity sensor 1580G may also be used in a smart cover mode or a pocket mode to automatically perform screen unlocking or locking.

The ambient light sensor 1580L is configured to sense ambient light brightness. The electronic device 1500 may adaptively adjust brightness of the display 1594 based on the sensed ambient light brightness. The ambient light sensor 1580L may also be configured to automatically adjust white balance during photographing. The ambient light sensor 1580L may also cooperate with the optical proximity sensor 1580G to detect whether the electronic device 1500 is in a pocket, to avoid an accidental touch.

The fingerprint sensor 1580H is configured to collect a fingerprint. The electronic device 1500 may use a feature of the collected fingerprint to implement fingerprint-based unlocking, application lock access, fingerprint-based photographing, fingerprint-based call answering, and the like.

The temperature sensor 1580J is configured to detect a temperature. In some embodiments, the electronic device 1500 executes a temperature processing policy through the temperature detected by the temperature sensor 1580J. For example, when the temperature reported by the temperature sensor 1580J exceeds a threshold, the electronic device 1500 lowers performance of a processor nearby the temperature sensor 1580J, to reduce power consumption for thermal protection. In some other embodiments, when the temperature is less than another threshold, the electronic device 1500 heats the battery 1542 to prevent the electronic device 1500 from being shut down abnormally due to a low temperature. In some other embodiments, when the temperature is lower than still another threshold, the electronic device 1500 boosts an output voltage of the battery 1542 to avoid abnormal shutdown caused by a low temperature.

The touch sensor 1580K is also referred to as a "touch component". The touch sensor 1580K may be disposed on the display 1594, and the touch sensor 1580K and the display 1594 constitute a touchscreen, which is also referred to as a "touch screen". The touch sensor 1580K is configured to detect a touch operation performed on or near the touch sensor 1580K. The touch sensor may transfer the detected touch operation to the application processor to determine a type of the touch event. The display 1594 may provide a visual output related to the touch operation. In some other embodiments, the touch sensor 1580K may alternatively be disposed on a surface of the electronic device 1500 at a location different from that of the display 1594.

The bone conduction sensor 1580M may obtain a vibration signal. In some embodiments, the bone conduction sensor 1580M may obtain a vibration signal of a vibration bone of a human vocal-cord part. The bone conduction sensor 1580M may also be in contact with a body pulse to receive a blood pressure beating signal. In some embodiments, the bone conduction sensor 1580M may alternatively be disposed in the headset, to obtain a bone conduction headset. The audio module 1570 may obtain a speech signal through parsing based on the vibration signal that is of the vibration bone of the vocal-cord part and that is obtained by the bone conduction sensor 1580M, to implement a speech function. The application processor may parse heart rate information based on the blood pressure beating signal obtained by the bone conduction sensor 1580M, to implement a heart rate detection function.

The button 1590 includes a power button, a volume button, and the like. The button 1590 may be a mechanical button, or may be a touch button. The electronic device 1500 may receive a button input, and generate a button signal input related to user settings and function control of the electronic device 1500.

The motor 1591 may generate a vibration prompt. The motor 1591 may be used for an incoming call vibration prompt, or may be used for a touch vibration feedback. For example, touch operations performed on different applications (such as a photographing application and an audio playing application) may correspond to different vibration feedback effects. The motor 1591 may also correspond to different vibration feedback effects for touch operations performed on different areas of the display 1594. Different application scenarios (for example, a time reminder, information receiving, an alarm clock, and a game) may also correspond to different vibration feedback effects. A touch vibration feedback effect may be further customized.

The indicator 1592 may be an indicator light that may be configured to indicate a charging state and a battery power change, and may further be configured to indicate a message, a missed call, a notification, and the like.

The SIM card interface 1595 is configured to connect to a SIM card. The SIM card may be inserted into the SIM card interface 1595 or removed from the SIM card interface 1595, to implement contact with or be separated from the electronic device 1500. The electronic device 1500 may support one or N SIM card interfaces, where N is a positive integer greater than 1. The SIM card interface 1595 may support a nano SIM card, a micro SIM card, a SIM card, and the like. A plurality of cards may be simultaneously inserted into a same SIM card interface 1595. The plurality of cards may be of a same type or different types. The SIM card interface 1595 may be compatible with different types of SIM cards. The SIM card interface 1595 is also compatible with an external storage card. The electronic device 1500 interacts with a network by using the SIM card, to implement functions such as calling and data communication. In some embodiments, the electronic device 1500 uses an eSIM, namely, an embedded SIM card. The eSIM card may be embedded into the electronic device 1500, and cannot be separated from the electronic device 1500.

It should be understood that the electronic device 1500 shown in FIG. 15 can implement the processes of the methods provided in the embodiments shown in FIG. 2 to FIG. 12 of this application. Operations and/or functions of the modules in the electronic device 1500 are separately intended to implement corresponding processes in the foregoing method embodiments. For details, refer to the descriptions in the method embodiments shown in FIG. 2 to FIG. 12. To avoid repetition, detailed descriptions are properly omitted herein.

It should be understood that the processor 1510 in the electronic device 1500 shown in FIG. 15 may be a system-on-a-chip (system-on-a-chip, SOC). The processor 1510 may include a central processing unit (central processing unit, CPU), or may further include another type of processor, for example, a graphics processing unit (graphics processing unit, GPU).

In conclusion, some processors or processing units in the processor 1510 may work together to implement the foregoing method processes, and software programs corresponding to the processors or processing units may be stored in the internal memory 121.

This application further provides an electronic device. The device includes a storage medium and a central processing unit. The storage medium may be a nonvolatile storage medium, and the storage medium stores a computer executable program. The central processing unit is connected to the nonvolatile storage medium, and executes the computer executable program to implement the method provided in the embodiments shown in FIG. 2 to FIG. 12 of this application.

In the foregoing embodiments, the processor may include, for example, a CPU, a DSP, a microcontroller, or a digital signal processor, and may further include a GPU, an embedded neural-network processing unit (neural-network processing unit, NPU), and an image signal processor (image signal processor, ISP). The processor may further include a hardware accelerator or logic processing hardware circuit, for example, an ASIC, or one or more integrated circuits configured to control program execution of the technical solutions in this application. In addition, the processor may have a function of operating one or more software programs. The software program may be stored in the storage medium.

An embodiment of this application further provides a computer-readable storage medium. The computer-readable storage medium stores a computer program. When the computer program is run on a computer, the computer is enabled to perform the method provided in the embodiments shown in FIG. 2 to FIG. 12 in this application.

An embodiment of this application further provides a computer program product. The computer program product includes a computer program. When the computer program is run on a computer, the computer is enabled to perform the method provided in the embodiments shown in FIG. 2 to FIG. 12 in this application.

In embodiments of this application, "at least one" means one or more, and "a plurality of' means two or more. The term "and/or" describes an association relationship for describing associated objects and indicates that three relationships may exist. For example, A and/or B may indicate the following three cases: Only A exists, both A and B exist, and only B exists. A and B may be in a singular form or a plural form. The character "/" generally indicates an "or" relationship between the associated objects. At least one of the following items and similar expressions refer to any combination of the items, including a single item or any combination of plural items. For example, at least one of a, b, and c may indicate a, b, c, a and b, a and c, b and c, or a, b, and c, where a, b, and c may be singular or plural.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the embodiments of this application, when any of the functions are implemented in a form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An antenna tuning method, comprising:
determining, by an electronic device, N antennas, wherein N≥2;
generating, by the electronic device, tuning status combinations of the N antennas based on a tuning status of each of the N antennas, wherein one tuning status combination comprises one tuning status of each of the N antennas, and at least one antenna has a different tuning status in a different tuning status combination;
sequentially transmitting, by the electronic device, an uplink signal based on each tuning status combination by using the N antennas;
receiving, by the electronic device, a receiving quality that is of the tuning status combination and that is sent by a network side device, wherein the receiving quality of the tuning status combination is a quality of receiving, by the network side device, an uplink signal transmitted by the electronic device based on the tuning status combination by using the N antennas; and
when determining that a receiving quality of one tuning status combination meets a preset condition, ending, by the electronic device, the step of sequentially transmitting an uplink signal based on each tuning status combination by using the N antennas, and setting the tuning statuses of the N antennas to tuning statuses in the one tuning status combination.

2. The method according to claim 1, wherein the receiving quality is a quality score; and the determining, by the electronic device, that a receiving quality of one tuning status combination meets a preset condition comprises:
determining, by the electronic device, that the quality score of the tuning status combination exceeds a preset score threshold.

3. The method according to claim 1, wherein the receiving quality is a quality parameter value; and the determining, by the electronic device, that a receiving quality of one tuning status combination meets a preset condition comprises:
determining, by the electronic device, that a quality parameter value of one tuning status combination meets a preset condition corresponding to the quality parameter value; or
calculating, by the electronic device, a quality score based on the quality parameter value, and determining that the quality score of the tuning status combination exceeds a preset score threshold.

4. The method according to claim 3, wherein the quality parameter value comprises: a receive power of the uplink signal, and/or linearity of the uplink signal, and/or an error vector magnitude EVM, and/or a quantity of resource blocks RBs, and/or a modulation and coding scheme MCS order, and/or a throughput; and the calculating, by the electronic device, a quality score based on the quality parameter value comprises:
multiplying, by the electronic device, a preset score of each quality parameter value by a weight value corresponding to the quality parameter value, and then calculating a sum of products to obtain the quality score.

5. The method according to any one of claims 1 to 4, further comprising:
after sequentially transmitting, by the electronic device, the uplink signal based on each tuning status combination by using the N antennas, when determining that the receiving quality of any tuning status combination does not meet the preset condition, selecting, by the electronic device, a tuning status combination with an optimal receiving quality; and
setting, by the electronic device, the tuning statuses of the N antennas to tuning statuses in the tuning status combination with the optimal receiving quality.

6. The method according to any one of claims 1 to 4, wherein the tuning status of the antenna comprises: a capacitance value, and/or a switch on/off state, and/or an inductance value.

7. An antenna tuning method, comprising:
determining, by an electronic device, N antennas, wherein N≥2;
generating, by the electronic device, tuning status combinations of the N antennas based on a tuning status of each of the N antennas, wherein one tuning status combination comprises one tuning status of each of the N antennas, and at least one antenna has a different tuning status in a different tuning status combination;
sequentially transmitting, by the electronic device, an uplink signal based on each tuning status combination by using the N antennas;
receiving, by the electronic device, a receiving quality that is of each tuning status combination and that is sent by a network side device, wherein the receiving quality of the tuning status combination is a quality of receiving, by the network side device, an uplink signal transmitted by the electronic device based on the tuning status combination by using the N antennas;
selecting, by the electronic device, a tuning status combination with an optimal receiving quality; and
setting, by the electronic device, the tuning statuses of the N antennas to tuning statuses in the tuning status combination with the optimal receiving quality.

8. The method according to claim 7, wherein the receiving quality is a quality score; and the selecting, by the electronic device, a tuning status combination with an optimal receiving quality comprises:
selecting, by the electronic device, a tuning status combination with a highest quality score.

9. The method according to claim 7, wherein the receiving quality is a quality parameter value; and the selecting, by the electronic device, a tuning status combination with an optimal receiving quality comprises:
calculating, by the electronic device, a quality score based on the quality parameter value, and selecting a tuning status combination with a highest quality score.

10. The method according to claim 9, wherein the quality parameter value comprises: a receive power of the uplink signal, and/or linearity of the uplink signal, and/or an error vector magnitude EVM, and/or a quantity of resource blocks RBs, and/or a modulation and coding scheme MCS order, and/or a throughput; and the calculating, by the electronic device, a quality score based on the quality parameter value comprises:
multiplying, by the electronic device, a preset score of each quality parameter value by a weight value corresponding to the quality parameter value, and then calculating a sum of products to obtain the quality score.

11. The method according to any one of claims 7 to 10, wherein the tuning status of the antenna comprises: a capacitance value, and/or a switch on/off state, and/or an inductance value.

12. An antenna tuning method, comprising:
receiving, by a network side device, an uplink signal transmitted by an electronic device based on a tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining, by the network side device, a receiving quality of the uplink signal; and
sending, by the network side device, the receiving quality as a receiving quality of the one tuning status combination to the electronic device.

13. The method according to claim 12, wherein the receiving quality of the tuning status combination is a quality score; and the obtaining, by the network side device, a receiving quality of the uplink signal comprises:
obtaining, by the network side device, a quality parameter value of the uplink signal; and
calculating, by the network side device, a quality score based on the quality parameter value.

14. The method according to claim 13, wherein the quality parameter value comprises: a receive power of the uplink signal, and/or linearity of the uplink signal, and/or an error vector magnitude EVM, and/or a quantity of resource blocks RBs, and/or a modulation and coding scheme MCS order, and/or a throughput; and the calculating, by the network side device, a quality score based on the quality parameter value comprises:
multiplying, by the network side device, a preset score of each quality parameter value by a weight value corresponding to the quality parameter value, and then calculating a sum of products to obtain the quality score.

15. The method according to any one of claims 12 to 14, wherein the tuning status of the antenna comprises: a capacitance value, and/or a switch on/off state, and/or an inductance value.

16. An antenna tuning method, comprising:
determining, by an electronic device, N antennas, wherein N≥2;
generating, by the electronic device, tuning status combinations of the N antennas based on a tuning status of each of the N antennas, wherein one tuning status combination comprises one tuning status of each of the N antennas, and at least one antenna has a different tuning status in a different tuning status combination;
sequentially transmitting, by the electronic device, an uplink signal based on each tuning status combination by using the N antennas;
receiving, by the electronic device, a tuning status combination indicated by a network side device, wherein the indicated tuning status combination is indicated after the network side device determines that a receiving quality of the tuning status combination meets a preset condition, and the receiving quality of the tuning status combination is a quality of receiving, by the network side device, an uplink signal transmitted by the electronic device based on the tuning status combination by using the N antennas; and
ending, by the electronic device, the step of sequentially transmitting an uplink signal based on each tuning status combination by using the N antennas, and setting the tuning statuses of the N antennas to tuning statuses in the indicated tuning status combination.

17. The method according to claim 16, further comprising:
when the electronic device sequentially transmits the uplink signal based on each tuning status combination by using the N antennas, and does not receive a tuning status combination indicated by the network side device, sending, to the network side device, a notification that transmission of the uplink signals based on the tuning status combinations ends; and
receiving, by the electronic device, a tuning status combination with an optimal receiving quality, and setting the tuning statuses of the N antennas to tuning statuses in the tuning status combination with the optimal receiving quality, wherein the tuning status combination with the optimal receiving quality is indicated by the network side device.

18. The method according to claim 16 or 17, wherein the tuning status of the antenna comprises: a capacitance value, and/or a switch on/off state, and/or an inductance value.

19. An antenna tuning method, comprising:
receiving, by a network side device, an uplink signal transmitted by an electronic device based on a tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining, by the network side device, a receiving quality of the uplink signal; and
indicating, by the network side device, the tuning status combination to the electronic device when determining that the receiving quality meets a preset condition, so that the electronic device sets the tuning statuses of the N antennas to tuning statuses in the indicated tuning status combination.

20. The method according to claim 19, wherein the receiving quality is a quality parameter value; and the determining, by the network side device, that the receiving quality meets a preset condition comprises:
determining, by the network side device, that each quality parameter value meets a preset condition corresponding to the quality parameter value.

21. The method according to claim 19, wherein the receiving quality is a quality score, and the obtaining, by the network side device, a receiving quality of the uplink signal comprises:
obtaining, by the network side device, a quality parameter value of the uplink signal, and calculating a quality score based on the quality parameter value; and
correspondingly, the determining, by the network side device, that the receiving quality meets a preset condition comprises:
determining, by the network side device, that the quality score exceeds a preset score threshold.

22. The method according to claim 21, wherein the quality parameter value comprises: a receive power of the uplink signal, and/or linearity of the uplink signal, and/or an error vector magnitude EVM, and/or a quantity of resource blocks RBs, and/or a modulation and coding scheme MCS order, and/or a throughput; and the calculating, by the network side device, a quality score based on the quality parameter value comprises:
multiplying, by the network side device, a preset score of each quality parameter value by a weight value corresponding to the quality parameter value, and then calculating a sum of products to obtain the quality score.

23. The method according to any one of claims 19 to 22, further comprising:
if the network side device receives a notification that transmission of uplink signals, sent by the electronic device, based on tuning status combinations ends, and determines that none of receiving qualities meets the preset condition, selecting a tuning status combination with an optimal receiving quality, and indicating the selected tuning status combination with the optimal receiving quality to the electronic device.

24. The method according to any one of claims 19 to 22, wherein the tuning status of the antenna comprises: a capacitance value, and/or a switch on/off state, and/or an inductance value.

25. An antenna tuning method, comprising:
determining, by an electronic device, N antennas, wherein N≥2;
generating, by the electronic device, tuning status combinations of the N antennas based on a tuning status of each of the N antennas, wherein one tuning status combination comprises one tuning status of each of the N antennas, and at least one antenna has a different tuning status in a different tuning status combination;
sequentially transmitting, by the electronic device, an uplink signal based on each tuning status combination by using the N antennas;
receiving, by the electronic device, a tuning status combination indicated by a network side device, wherein the indicated tuning status combination is a tuning status combination with an optimal receiving quality after the electronic device sequentially transmits the uplink signal based on each tuning status combination by using the N antennas, and a receiving quality of the tuning status combination is a quality of receiving, by the network side device, an uplink signal transmitted by the electronic device based on the tuning status combination by using the N antennas, wherein the tuning status combination with the optimal receiving quality is selected by the network side device; and
setting, by the electronic device, the tuning statuses of the N antennas to tuning statuses in the indicated tuning status combination.

26. The method according to claim 25, wherein the tuning status of the antenna comprises: a capacitance value, and/or a switch on/off state, and/or an inductance value.

27. An antenna tuning method, comprising:
receiving, by a network side device, an uplink signal sequentially transmitted by an electronic device based on each tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining, by the network side device, a receiving quality of each tuning status combination based on the received uplink signal, wherein the receiving quality of the tuning status combination is a quality of receiving, by the network side device, an uplink signal transmitted by the electronic device based on the tuning status combination by using the N antennas;
selecting, by the network side device, a tuning status combination with an optimal receiving quality after the electronic device sequentially transmits the uplink signal based on each tuning status combination by using the N antennas; and
indicating, by the network side device, the selected tuning status combination to the electronic device, so that the electronic device sets the tuning statuses of the N antennas to tuning statuses in the indicated tuning status combination.

28. The method according to claim 27, wherein the receiving quality is a quality score; and the selecting, by the network side device, a tuning status combination corresponding to an optimal receiving quality comprises:
selecting, by the network side device, a tuning status combination corresponding to a highest quality score.

29. The method according to claim 27, wherein the receiving quality is a quality parameter value; and the selecting, by the network side device, a tuning status combination corresponding to an optimal receiving quality comprises:
calculating, by the network side device, a quality score based on the quality parameter value, and selecting a tuning status combination corresponding to a highest quality score.

30. The method according to claim 29, wherein the quality parameter value comprises: a receive power of the uplink signal, and/or linearity of the uplink signal, and/or an error vector magnitude EVM, and/or a quantity of resource blocks RBs, and/or a modulation and coding scheme MCS order, and/or a throughput; and the calculating, by the network side device, a quality score based on the quality parameter value comprises:
multiplying, by the network side device, a preset score of each quality parameter value by a weight value corresponding to the quality parameter value, and then calculating a sum of products to obtain the quality score.

31. The method according to any one of claims 27 to 30, wherein the tuning status of the antenna comprises: a capacitance value, and/or a switch on/off state, and/or an inductance value.

32. An electronic device, comprising:
one or more processors, a memory, and one or more computer programs, wherein the one or more computer programs are stored in the memory, the one or more computer programs comprise instructions, and when the instructions are executed by the device, the device is enabled to perform the following steps:
determining N antennas, wherein N≥2;
generating tuning status combinations of the N antennas based on a tuning status of each of the N antennas, wherein one tuning status combination comprises one tuning status of each of the N antennas, and at least one antenna has a different tuning status in a different tuning status combination;
sequentially transmitting an uplink signal based on each tuning status combination by using the N antennas;
receiving a receiving quality that is of the tuning status combination and that is sent by a network side device, wherein the receiving quality of the tuning status combination is a quality of receiving, by the network side device, an uplink signal transmitted by the electronic device based on the tuning status combination by using the N antennas; and
when determining that a receiving quality of one tuning status combination meets a preset condition, ending the step of sequentially transmitting an uplink signal based on each tuning status combination by using the N antennas, and setting the tuning statuses of the N antennas to tuning statuses in the one tuning status combination.

33. An electronic device, comprising:
one or more processors, a memory, and one or more computer programs, wherein the one or more computer programs are stored in the memory, the one or more computer programs comprise instructions, and when the instructions are executed by the device, the device is enabled to perform the following steps:
determining N antennas, wherein N≥2;
generating tuning status combinations of the N antennas based on a tuning status of each of the N antennas, wherein one tuning status combination comprises one tuning status of each of the N antennas, and at least one antenna has a different tuning status in a different tuning status combination;
sequentially transmitting an uplink signal based on each tuning status combination by using the N antennas;
receiving a receiving quality that is of each tuning status combination and that is sent by a network side device, wherein the receiving quality of the tuning status combination is a quality of receiving, by the network side device, an uplink signal transmitted by the electronic device based on the tuning status combination by using the N antennas;
selecting a tuning status combination with an optimal receiving quality; and
setting the tuning statuses of the N antennas to tuning statuses in the tuning status combination with the optimal receiving quality.

34. An electronic device, comprising:
one or more processors, a memory, and one or more computer programs, wherein the one or more computer programs are stored in the memory, the one or more computer programs comprise instructions, and when the instructions are executed by the device, the device is enabled to perform the following steps:
determining N antennas, wherein N≥2;
generating tuning status combinations of the N antennas based on a tuning status of each of the N antennas, wherein one tuning status combination comprises one tuning status of each of the N antennas, and at least one antenna has a different tuning status in a different tuning status combination;
sequentially transmitting an uplink signal based on each tuning status combination by using the N antennas;
receiving a tuning status combination indicated by a network side device, wherein the indicated tuning status combination is indicated after the network side device determines that a receiving quality of the tuning status combination meets a preset condition, and the receiving quality of the tuning status combination is a quality of receiving, by the network side device, an uplink signal transmitted by the electronic device based on the tuning status combination by using the N antennas; and
ending the step of sequentially transmitting an uplink signal based on each tuning status combination by using the N antennas, and setting the tuning statuses of the N antennas to tuning statuses in the indicated tuning status combination.

35. An electronic device, comprising:
one or more processors, a memory, and one or more computer programs, wherein the one or more computer programs are stored in the memory, the one or more computer programs comprise instructions, and when the instructions are executed by the device, the device is enabled to perform the following steps:
determining N antennas, wherein N≥2;
generating tuning status combinations of the N antennas based on a tuning status of each of the N antennas, wherein one tuning status combination comprises one tuning status of each of the N antennas, and at least one antenna has a different tuning status in a different tuning status combination;
sequentially transmitting an uplink signal based on each tuning status combination by using the N antennas;
receiving a tuning status combination indicated by a network side device, wherein the indicated tuning status combination is a tuning status combination with an optimal receiving quality after the electronic device sequentially transmits the uplink signal based on each tuning status combination by using the N antennas, wherein the tuning status combination with the optimal receiving quality is selected by the network side device; and a receiving quality of the tuning status combination is a quality of receiving, by the network side device, an uplink signal transmitted by the electronic device based on the tuning status combination by using the N antennas; and
setting the tuning statuses of the N antennas to tuning statuses in the indicated tuning status combination.

36. A network side device, comprising:
one or more processors, a memory, and one or more computer programs, wherein the one or more computer programs are stored in the memory, the one or more computer programs comprise instructions, and when the instructions are executed by the device, the device is enabled to perform the following steps:
receiving an uplink signal transmitted by an electronic device based on a tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining a receiving quality of the uplink signal; and
sending the receiving quality as a receiving quality of the one tuning status combination to the electronic device.

37. A network side device, comprising:
one or more processors, a memory, and one or more computer programs, wherein the one or more computer programs are stored in the memory, the one or more computer programs comprise instructions, and when the instructions are executed by the device, the device is enabled to perform the following steps:
receiving an uplink signal transmitted by an electronic device based on a tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining a receiving quality of the uplink signal; and
when determining that the receiving quality meets a preset condition, indicating the tuning status combination to the electronic device, so that the electronic device sets the tuning statuses of the N antennas to tuning statuses in the indicated tuning status combination.

38. A network side device, comprising:
one or more processors, a memory, and one or more computer programs, wherein the one or more computer programs are stored in the memory, the one or more computer programs comprise instructions, and when the instructions are executed by the device, the device is enabled to perform the following steps:
receiving an uplink signal sequentially transmitted by an electronic device based on each tuning status combination by using N antennas, wherein N≥2, the tuning status combination is generated by the electronic device based on a tuning status of each of the N antennas, one tuning status combination comprises one tuning status of each of the N antennas, and at least one antenna has a different tuning status in a different tuning status combination;
obtaining a receiving quality of each tuning status combination based on the received uplink signal, wherein the receiving quality of the tuning status combination is a quality of receiving an uplink signal by a network side device when the electronic device transmits the uplink signal based on the tuning status combination by using the N antennas;
selecting a tuning status combination with an optimal receiving quality after the electronic device sequentially transmits the uplink signal based on each tuning status combination by using the N antennas; and
indicating the selected tuning status combination to the electronic device, so that the electronic device sets the tuning statuses of the N antennas to tuning statuses in the indicated tuning status combination.

39. A computer-readable storage medium, wherein the computer-readable storage medium stores a computer program, and when the computer program runs on a computer, the computer is enabled to perform the method according to any one of claims 1 to 6.

40. A computer-readable storage medium, wherein the computer-readable storage medium stores a computer program, and when the computer program is run on a computer, the computer is enabled to perform the method according to any one of claims 7 to 11.

41. A computer-readable storage medium, wherein the computer-readable storage medium stores a computer program, and when the computer program is run on a computer, the computer is enabled to perform the method according to any one of claims 12 to 15.

42. A computer-readable storage medium, wherein the computer-readable storage medium stores a computer program, and when the computer program is run on a computer, the computer is enabled to perform the method according to any one of claims 16 to 18.

43. A computer-readable storage medium, wherein the computer-readable storage medium stores a computer program, and when the computer program is run on a computer, the computer is enabled to perform the method according to any one of claims 19 to 24.

44. A computer-readable storage medium, wherein the computer-readable storage medium stores a computer program, and when the computer program is run on a computer, the computer is enabled to perform the method according to any one of claims 25 and 26.

45. A computer-readable storage medium, wherein the computer-readable storage medium stores a computer program, and when the computer program is run on a computer, the computer is enabled to perform the method according to any one of claims 27 to 31.
